# EUROPÄISCHE PATENTSCHRIFT

(11) **EP 3 538 871 B1**
(45) Veröffentlichungstag und Bekanntmachung des Hinweises auf die Patenterteilung: **31.12.2025**
(21) Anmeldenummer: 17797334.4
(22) Anmeldetag: 10.11.2017
(51) Int. Cl.: G01J 3/42, G01N 21/17, H01J 61/00

(54) **SPEKTROMETER AUFWEISEND EINE ENTLADUNGSLAMPE MIT MEHREREN STRAHLENWEGEN**
SPEKTROMETER COMPRISING A DISCHARGE LAMP WITH MULTIPLE BEAM PATHS
SPECTROMETRE COMPRENANT UNE LAMPE A DECHARGE AVEC PLUSIEURS TRAJECTOIRES DE FAISEAUX DIFFERENTES

(30) Priorität: 11.11.2016 DE 202016106325 U; 08.11.2017 DE 202017106764 U
(43) Veröffentlichungstag der Anmeldung: 18.09.2019
(73) Patentinhaber: Mikrowellen Labor Technik AG, 9435 Heerbrugg (CH)
(72) Erfinder: LAUTENSCHLÄGER, Werner, 9435 Heerbrugg (CH); LAUTENSCHLÄGER, Jens, 9435 Heerbrugg (CH)
(74) Vertreter: Kaminski Harmann
(86) Internationale Anmeldenummer: PCT/EP2017/078866
(87) Internationale Veröffentlichungsnummer: WO 2018/087279

(56) Entgegenhaltungen:
- WO-A2-2006/017644
- GB-A- 2 017 905
- JP-A- S5 757 242
- US-A- 4 523 096
- US-A- 5 214 593

## Beschreibung

Die Erfindung betrifft ein Spektrometer zur quantitativen und/oder qualitativen Bestimmung einer Probe.

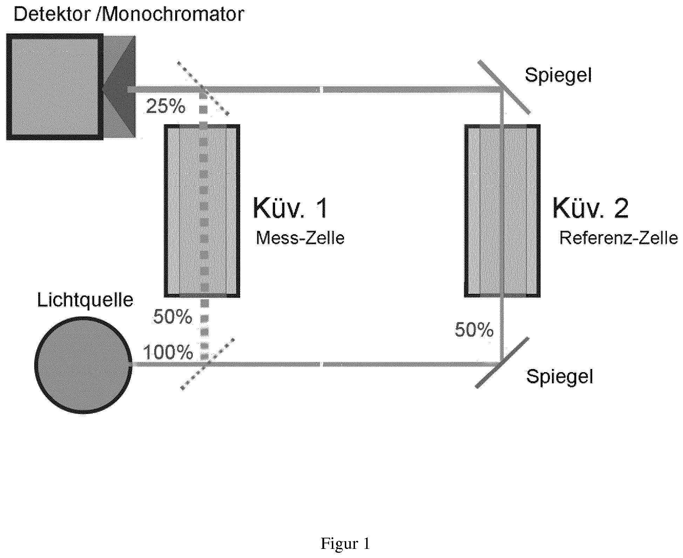

Spektrometer sind aus dem Stand der Technik bekannt. Hierbei ist insbesondere die klassische Zweistrahltechnik bekannt, bei der halbdurchlässige Spiegel verwendet werden. Eine beispielhafte Anordnung hierzu ist in Figur 1 gezeigt. Bei der klassischen Zweistrahltechnik wird ein von einer Lichtquelle ausgehender Lichtstrahl durch einen ersten halbdurchlässigen Spiegel in zwei unabhängige Lichtstrahlen aufgeteilt. Der erste Lichtstrahl wird mittels des halbdurchlässigen Spiegels durch eine Messzelle (Küvette (Küv.) 1) welche eine zu messende Probe enthält, geführt, und der zweite Lichtstrahl wird an einem weiteren Spiegel derart umgelenkt, dass der durch eine Referenzzelle (Küv. 2) geleitet wird. Beide Lichtstrahlen werden durch weitere Spiegel bzw. halbdurchlässige Spiegel nochmals umgelenkt, um anschließend durch einen Monochromator und schließlich auf einen Detektor zu gelangen bzw. vor dem Monochromator wieder vereint zu werden. Der erste Lichtstrahl wechselwirkt mit der Messzelle bzw. mit der in der Messzelle enthaltenen Probe, wobei diese Wechselwirkung durch den Detektor und den Monochromator abgebildet wird. Die Referenzzelle, welche eine Referenzflüssigkeit enthält, dient dabei zur Referenzierung der Messung der Probe, wodurch insbesondere eine Matrix im Referenzbereich subtrahiert und auch eine Lampenschwankung weitgehend kompensiert werden soll. Zur Messung und Referenzierung wird abwechselnd der Strahl durch die Messzelle und der Strahl durch die Referenzzelle geführt, d.h. die Lichtstrahlen der jeweiligen Zellen erreichen den Detektor und den Monochromator hintereinander. Bei dieser Anordnung mit statischen Bauelementen, d.h. den halbdurchlässigen und normalen Spiegeln, gehen in der Regel über 75 % der Energie, insbesondere der Lichtenergie, verloren. Gleichzeitig muss der Referenzkanal, d.h. der Pfad von der Lichtquelle über die Referenzzelle hin zum Detektor und Monochromator, und der Probenkanal, d.h. der Pfad von der Lichtquelle über die Messzelle hin zum Detektor und Monochromator, zur Unterscheidung kurzzeitig unterbrochen werden. Diese kurzzeitige Unterbrechung kann beispielsweise mittels eines Choppers oder eines Strahlschalters ("beam switcher") erfolgen. Anstelle der halbdurchlässigen Spiegel könnten im Stand der Technik auch rotierende Spiegel verwendet werden, die die beiden Strahlen jeweils umschalten. Eine weitere Möglichkeit aus dem Stand der Technik kann auch ein sogenanntes Sheddach sein mit 90 % Spiegelteilern. Ebenso sind aus dem Stand der Technik Ausführungen bekannt, welche eine Beugung an Prismenschaltern und der gleichen vornehmen.

Es ergibt sich folglich für die aus dem Stand der Technik bekannten Vorrichtungen, dass Licht und Energie durch die reflektierenden Teile verloren geht, und die Justage der Kanäle sehr aufwendig ist. Nicht zuletzt sind all diese aus dem Stand der Technik bekannten Vorrichtungen auch mit einem großen manuellen und optischen Aufwand - hierbei ist insbesondere an das Vorsehen zusätzlicher Linsen zu denken - verbunden.

Die WO 2006/017644 A2 offenbart ein Spektrometer, bei dem mittels Fluoreszenzmessung der Schwefeldioxidgehalt einer Probe in einer Kammer bestimmt wird. Die WO 2006/017644 A2 bezieht sich insbesondere auf ein Regelungssystem mit einer Fotodiode, welche die Lampenintensität misst, um entsprechend die Spannung der Lampe zu regeln, wenn diese an Intensität abnimmt.

Die US 4,523,096 A offenbart eine Flüssigkeitschromatographievorrichtung aufweisend eine Lichtquelle zum Emittieren ultravioletten Lichts. Eine duale Flusszelle der Vorrichtung wird von dem Licht der Lichtquelle durchquert. Die duale Flusszelle weist eine Probenzelle und eine Referenzzelle auf. Hinter den Zellen ist jeweils ein Detektor vorgesehen, um die jeweiligen Wellenlängen zu messen.

Die GB 2 017 905 A betrifft ein Gerät zur Überwachung der Konzentration eines ausgewählten Anästhetikums, vorzugsweise Halothan, in der Ausatemluft eines Patienten. Dieses Gerät umfasst eine Probenzelle, die an den Ausatemergenz des Anästhesiekreislaufs angeschlossen und so angeordnet ist, dass das gesamte Ausatemvolumen Atemzug für Atemzug durch die Zelle fließen kann. Eine Ultraviolettstrahlungsquelle ist so angeordnet, dass sie Strahlung einer Wellenlänge, die selektiv von dem Narkosemittel absorbiert wird, durch die Probenzelle und auch durch eine Referenzzelle leitet, wobei die Strahlungsstärke, die aus jeder Zelle austritt, durch entsprechende Photodetektoren erfasst wird und die Differenz die Menge an Strahlungsenergie darstellt, die von den Molekülen des Narkosemittels in der Probenzelle absorbiert wird.

Der Erfindung liegt daher die Aufgabe zugrunde, ein Spektrometer zu schaffen, welches insbesondere energieeffizienter arbeitet und zudem den manuellen und optischen Aufwand der Messung reduziert. Insbesondere soll auch ein Lampendrift, d.h. eine Leistungseinbuße und/oder -schwankung der Lampe bzw. der Lichtquelle, eliminiert werden.

Die Aufgabe wird erfindungsgemäß durch die Merkmale der unabhängigen Ansprüche gelöst. Vorteilhafte Weiterbildung sind Gegenstand der hierauf rückbezogenen Unteransprüche.

Ein erfindungsgemäßes Spektrometer gemäß einem ersten Aspekt der Erfindung weist unter anderem eine sich im Wesentlichen rohrförmige erstreckende Lampe zur Bildung einer sich in Richtung der rohrförmigen Erstreckung zwischen zwei Punkten erstreckenden Lichtemissionszone zur Abgabe eines ersten Lichtstrahls und eines zweiten Lichtstrahls mit einem gleichen Ursprung auf der Lichtemissionszone auf. Zudem weist das Spektrometer ein im Strahlengang des ersten Lichtstrahls angeordnetes Probenbehältnis zur Aufnahme einer zu messenden Probe auf. In Richtung des ersten Lichtstrahls ist eine erste Detektionsvorrichtung zur quantitativen und/oder qualitativen Bestimmung der in dem Probenbehältnis zu messenden Probe auf Basis einer Wechselwirkung zwischen der zu messenden Probe und dem ersten Lichtstrahl vorgesehen. In Richtung des zweiten Lichtstrahls ist eine zweite Detektionsvorrichtung zur Referenzierung der quantitativen und/oder qualitativen Bestimmung der zu messenden Probe auf Basis des zweiten Lichtstrahls vorgesehen.

Unter einer Lichtemissionszone wird im Rahmen dieser Erfindung ein zwei- oder dreidimensionaler Bereich (bspw. ein im Wesentlichen zylindrisch ausgebildetes Lichtplasma) verstanden, welcher in der Lage ist, Licht unterschiedlicher Wellenlänge zu emittieren. Start- und Endpunkt dieses Bereichs sind dabei die vorgenannten zwei Punkte.

Unter einem Lichtstrahl wird im Rahmen der Erfindung insbesondere gebündeltes Licht mit unterschiedlicher Wellenlänge, d.h. also insbesondere weißes Licht, verstanden. Die im Wesentlichen gleichgerichtete Erstreckung der jeweiligen Lichtstrahlen ist dabei der jeweilige Strahlengang, wobei der Strahlengang wiederum eine bevorzugt definierte Erstreckungsrichtung aufweist.

Unter einem "Ursprung auf der Lichtemissionszone" wird im Rahmen der Erfindung jener Punkt verstanden, aus dem ein Lichtstrahl entspringen kann; also bspw. der Punkt/Bereich, an dem der Lichtstrahl die Lichtemissionszone verlässt. "Gleich" wird dabei insbesondere derart verstanden, dass die Lichtemissionszone an jenem "gleichen" Punkt gleiche Eigenschaften, d.h. insbesondere die gleiche Helligkeit, aufweist. Dies trifft bei einem Lichtplasma als Lichtemissionszone bspw. an Bereichen der Lichtemissionszone auf, welche diese bei gleicher Position zwischen den Punkten bzw. gleichem Abstand zu den Punkten bevorzugt im gleichen Winkel zur Lichtemissionszone verlassen.

Unter einer quantitativen und/oder qualitativen Bestimmung einer zu messenden Probe wird im Rahmen der Erfindung die Messung relevanter Parameter der Probe verstanden, wobei diese Parameter insbesondere relative Mengenverhältnisse einer Zusammensetzung der Probe sein können.

Unter einer Wechselwirkung zwischen einer Probe und einem Lichtstrahl wird im Rahmen der Erfindung insbesondere verstanden, dass die Eigenschaften des von der Lichtemissionszone emittierten Lichts sich durch die Probe, durch welche der Lichtstrahl verläuft, verändern. Dabei kann insbesondere der Lichtstrahl aufgrund probenspezifischer Eigenschaften geschwächt (Absorption) oder gestärkt werden. Letztgenannte Alternative basiert insbesondere auf der Grundlage, dass ein angeregtes Atom des Elements, durch welches der Lichtstrahl läuft, eine elementspezifische elektromagnetische Strahlung aussendet.

Unter einer Referenzierung wird im Rahmen der Erfindung insbesondere verstanden, dass ungewünschte Effekte, welche durch eine Wechselwirkung zwischen der zu messenden Probe und dem ersten Lichtstrahl entstehen, eliminiert werden. Ebenso soll dadurch auch eine Lampenschwankung der Lampe kompensiert werden.

In anderen Worten schlägt die vorliegende Erfindung ein Spektrometer vor, welches auf einfache Art und Weise einen identischen Referenzstrahl zum Messstrahl, d.h. die beiden Lichtstrahlen, erzeugen bzw. abfragen kann. Dadurch wird insbesondere die Lampendrift eliminiert und somit eine hohe Langzeitstabilität des Spektrometers erzielt. Außerdem können durch ein derartiges Vorsehen der Lichtstrahlen und der entsprechenden Detektionsvorrichtungen die aus dem Stand der Technik bekannten Spiegel entfallen. Auf diese Weise kann das Spektrometer insgesamt energieeffizienter ausgeführt werden. Zudem können Bauteile, d.h. insbesondere optische Bauteile wie beispielsweise Spiegel, eingespart werden bzw. komplett entfallen. Im Vergleich zu den aus dem Stand der Technik bekannten Vorrichtungen benötigt das erfindungsgemäße Spektrometer also keine bzw. keine vergleichbar aufwändigen Optiken. Ebenso vereinfacht sich die Handhabung des Spektrometers, da die beiden Lichtstrahlen nunmehr gleichzeitig vorgesehen sein können. Außerdem kann das aus dem Stand der Technik erforderliche Umschalten somit entfallen. Des Weiteren kann durch die erfindungsgemäße Anordnung die Lampenintensität automatisch kompensiert werden. Dieser Effekt wird insbesondere durch die Lage der Emissionszone (Höhe der Emissionsstelle bzw. Beobachtungszone), d.h. insbesondere durch den gleichen Ursprung der Lichtstrahlen auf der Lichtemissionszone bzw. dem Emittieren in gleicher Höhe, bewirkt, welche auf den Detektoren abgebildet wird. Zudem wird durch ein derartiges Vorsehen der Lichtstrahlen die Messsignalstabilität gegenüber dem Stand der Technik positiv beeinflusst. Gegenüber der klassischen, bis heute verwendeten klassischen 2-Strahl-Technik, stellt die erfindungsgemäße Anordnung also eine sehr einfache und effiziente Lösung dar, Änderungen in der Lampenemission auszugleichen.

Die Lichtemissionszone kann zur Abgabe wenigstens eines weiteren Lichtstrahls vorgesehen sein, wobei der erste Lichtstrahl und der weitere Lichtstrahl jeweils einen Ursprung auf der Lichtemissionszone haben, wobei das Spektrometer ferner aufweist: ein im Strahlengang des weiteren Lichtstrahls angeordnetes weiteres Probenbehältnis zur Aufnahme einer zu messenden Probe, und eine in Richtung des weiteren Lichtstrahls angeordnete weitere Detektionsvorrichtung zur quantitativen und/oder qualitativen Bestimmung der in dem weiteren Probenbehältnis zu messenden Probe auf Basis einer Wechselwirkung zwischen der zu messenden Probe und dem weiteren Lichtstrahl.

Ein erfindungsgemäßes Spektrometer gemäß einem zweiten Aspekt der Erfindung weist unter anderem eine sich im Wesentlichen rohrförmig erstreckende Lampe zur Bildung einer sich in Richtung der rohrförmigen Erstreckung und zwischen zwei Punkten erstreckenden Lichtemissionszone zur Abgabe eines ersten Lichtstrahls und eines weiteren Lichtstrahls, vorzugsweise zwei weiteren Lichtstrahlen, mit jeweils einem Ursprung (d.h. insbesondere mit unterschiedlichen Ursprüngen) auf der Lichtemissionszone auf. Das Spektrometer weist ein im Strahlengang des ersten Lichtstrahls angeordnetes Probenbehältnis zur Aufnahme einer zu messenden Probe und ein im Strahlengang des weiteren Lichtstrahls angeordnetes weiteres Probenbehältnis zur Aufnahme einer zu messenden Probe auf. In Richtung des ersten Lichtstrahls ist eine erste Detektionsvorrichtung zur quantitativen und/oder qualitativen Bestimmung der in dem Probenbehältnis zu messenden Probe auf Basis einer Wechselwirkung zwischen der zu messenden Probe und dem ersten Lichtstrahl angeordnet, und in Richtung des weiteren Lichtstrahls ist eine weitere Detektionsvorrichtung zur quantitativen und/oder qualitativen Bestimmung der in dem weiteren Probenbehältnis zu messenden Probe auf Basis einer Wechselwirkung zwischen der zu messenden Probe und dem weiteren Lichtstrahl angeordnet.

Mit anderen Worten wird mit dem weiteren Lichtstrahl, dem weiteren Probenbehältnis und der weiteren Detektionsvorrichtung bzw. mit dem Spektrometer gemäß dem zweiten Aspekt der vorliegenden Erfindung die zu messende Probe in den Probenbehältnissen quantitativ und/oder qualitativ mittels der Lichtstrahlen der einzigen Lampe bestimmt. Die Lichtemissionszone erstreckt sich also derart, um somit zumindest zwei, vorzugsweise drei Probenbehältnisse (d.h. Mess-Zellen oder Küvetten) bzw. Detektionsvorrichtungen zu beleuchten. Da zudem die Lichtstrahlen ihren Ursprung in der gleichen Lichtemissionszone haben, wird ein unerwünschter Lampendrift - ähnlich wie bei dem ersten Aspekt der Erfindung - kompensiert. Im Ergebnis wird somit ein sehr platzsparendes, insbesondere lediglich eine Lampe mit lediglich einem Lampen-Netzteil aufweisendes Spektrometer bereitgestellt, welches gleichzeitig die zu messende Probe quantitativ und/oder qualitativ sehr genau, d.h. mit einer besonders hohen Güte mit aussagekräftigen Messergebnissen bestimmen kann.

Die Probenbehältnisse können fluidtechnisch miteinander verbunden sein, vorzugsweise in Reihe geschaltet sein, wobei vorzugsweise eines der Probenbehältnisse eine Öffnung zur Zuführung der zu messenden Probe von außen aufweist und ein anderes Probenbehältnis eine Öffnung zur Entnahme der zu messenden Probe von außen aufweist, so dass die zu messende Probe zur quantitativen und/oder qualitativen Bestimmung durch die fluidtechnisch verbundenen Probenbehältnisse geleitet werden kann. Auf diese Weise wird die zu messende Probe auf einfache Art und Weise in den Probenbehältnissen nacheinander quantitativ und/oder qualitativ bestimmt. Dadurch gestaltet sich der Messprozess effizienter. Außerdem werden durch die nacheinander vorgesehene Messung der Probe in vorzugsweise zwei unterschiedlichen Probenbehältnissen aussagekräftige Messergebnisse erzielt.

Der erste Lichtstrahl und der weitere Lichtstrahl haben vorzugsweise einen bezüglich der Erstreckung der Lichtemissionszone gleichen oder anderen Ursprung. Mit anderen Worten können die Probenbehältnisse mit jeweils zugeordneter Detektionsvorrichtung zueinander in beliebiger Weise im Lichtemissionsbereich (z.B. in Form eines Lichtkegels) der Lichtemissionszone angeordnet werden. Hierdurch wird somit eine sehr flexible und gleichzeitig platzsparende Anordnung des Spektrometers bewirkt.

Vorteilhafterweise unterscheiden sich die Probenbehältnisse, d.h. wenigstens das Probenbehältnis und das weitere Probenbehältnis, in ihrer jeweiligen Erstreckung in Richtung entlang des jeweiligen Lichtstrahls, vorzugsweise derart, dass die Erstreckung des weiteren Probenbehältnisses in Richtung des weiteren Lichtstrahls kürzer ist als die Erstreckung des Probenbehältnisses in Richtung des ersten Lichtstrahls. Hierdurch, d.h. insbesondere durch die unterschiedlichen Schichttiefen, unterscheidet sich die Wechselwirkung des Lichtstrahls mit der zu messenden Probe in dem Probenbehältnis von der Wechselwirkungen des weiteren Lichtstrahls mit der zu messenden Probe in dem weiteren Probenbehältnis. Folglich werden in den Detektionsvorrichtungen unterschiedliche Wechselwirkungen abgebildet und somit unterschiedliche Signale erzeugt, welche somit bspw. zur Präzisierung der quantitativen und/oder qualitativen Bestimmung der zu messenden Probe benutzt werden können. Die Güte der Messung mittels des Spektrometers kann somit erhöht werden.

Die Lichtemissionszone kann zur Abgabe wenigstens eines zusätzlichen Lichtstrahls vorgesehen sein, wobei der weitere Lichtstrahl und der zusätzliche Lichtstrahl den gleichen Ursprung auf der Lichtemissionszone haben, und wobei das Spektrometer wenigstens für eine, mehrere oder alle weiteren Detektionsvorrichtungen ferner aufweist: eine in Richtung des zusätzlichen Lichtstrahls angeordnete zusätzliche Detektionsvorrichtung zur Referenzierung der quantitativen und/oder qualitativen Bestimmung der zu messenden Probe auf Basis des zusätzlichen Lichtstrahls, wobei vorzugsweise zwischen der zusätzlichen Detektionsvorrichtung und der Lampe ein zusätzliches Referenzbehältnis mit einer Referenzflüssigkeit vorgesehen ist, und wobei die Referenzierung der quantitativen und/oder qualitativen Bestimmung der zu messenden Probe auf Basis einer Wechselwirkung zwischen der Referenzflüssigkeit und dem zusätzlichen Lichtstrahl erfolgt. Mit anderen Worten kann die quantitative und/oder qualitative Bestimmung der zu messenden Probe in dem weiteren Probenbehältnis entsprechend der Referenzierung gemäß dem ersten Aspekt der Erfindung referenziert werden. Die Vorteile des ersten Aspekts der Erfindung gelten somit in entsprechender Weise für diese bevorzugte Ausführung.

Das Probenbehältnis kann zwischen der ersten Detektionsvorrichtung und der Lampe angeordnet sein. Ebenso können die Probenbehältnisse jeweils zwischen der jeweiligen Detektionsvorrichtung und der Lampe angeordnet sein. Mit anderen Worten kann das Probenbehältnis zwischen der ersten Detektionsvorrichtung und der Lampe angeordnet sein, das weitere Probenbehältnis zwischen der weiteren Detektionsvorrichtung und der Lampe angeordnet sein, und das zusätzliche Probenbehältnis zwischen der zusätzlichen Detektionsvorrichtung der Lampe angeordnet sein. Dadurch wird eine sehr platzsparende Anordnung des Spektrometers erzielt.

Zwischen der zweiten Detektionsvorrichtung und der Lampe kann ein Referenzbehältnis mit einer Referenzflüssigkeit vorgesehen sein. Die Referenzierung der quantitativen und/oder qualitativen Bestimmung der zu messenden Proben kann dabei auf Basis einer Wechselwirkung zwischen der Referenzflüssigkeit und dem zweiten Lichtstrahl erfolgen. Hierdurch können durch die Referenzflüssigkeit insbesondere Effekte, welche bei der Wechselwirkung zwischen dem Lichtstrahl und der zu messenden Probe bzw. dessen Behältnisses entstehen, eliminiert werden. Dies kommt insbesondere der Qualität der Messungen zugute.

Vorzugsweise ist der gleiche Ursprung auf der Lichtemissionszone mit einem definierten Abstand zu einem der zwei Punkte vorgesehen. Unter einem definierten Abstand zu einem der zwei Punkte wird hierbei insbesondere verstanden, dass der gleiche Ursprung nicht mit einem der zwei Punkte zusammenfällt. Der definierte Abstand beträgt vorzugsweise zumindest 1mm, besonders bevorzugt zumindest 2mm, ganz besonders bevorzugt zumindest 5mm. Mittels des definierten Abstands ergeben sich vorteilhafte Ursprünge zur Emission der Lichtstrahlen zur Messung der Probe.

Vorzugsweise schließen die Lichtstrahlen, insbesondere der erste und der zweite Lichtstrahl und weiter bevorzugt der weitere und der zusätzliche Lichtstrahl, jeweils einen Winkel von 0° bis 90°, besonders bevorzugt einen Winkel von 90°, mit der Lichtemissionszone ein. Hinsichtlich der Qualität der Messung können die Winkel der - also dieser - Lichtstrahlen einen beliebigen Winkel mit der Lichtemissionszone einschließen. Der Grund hierfür ist insbesondere, dass lediglich der gleiche Ursprung auf der Lichtemissionszone von hoher Relevanz ist. Durch die vorgenannten Winkelbereiche kann jedoch eine besonders vorteilhafte räumliche Ausgestaltung des Spektrometers erzielt werden. Insbesondere wenn der Winkel genau 90° entspricht, kann eine sehr kompakte Anordnung der jeweiligen Elemente erzielt werden.

Die Lichtstrahlen, insbesondere der erste und der zweite Lichtstrahl sowie bevorzugt ferner der weitere und der zusätzliche Lichtstrahl, können jeweils in einer gemeinsame Ebene vorgesehen sein, wobei sich die gemeinsame Ebene vorzugsweise senkrecht zur Erstreckung der Lichtemissionszone erstreckt. D.h. vorzugsweise erstreckt sich die Lichtemissionszone in die gleiche Richtung wie der Normalenvektor der gemeinsamen Ebene.

Die Lichtstrahlen, insbesondere der erste und der zweite Lichtstrahl und bevorzugt ferner der weitere und der zusätzliche Lichtstrahl, können jeweils einen Winkel einschließen, welcher in einem Bereich bis einschließlich 180° liegt. Vorzugsweise beträgt dieser Winkel 180°. In anderen Worten erstrecken sich die - also diese - Lichtstrahlen vorzugsweise in dieselbe Richtung. Somit kann die wesentliche Erstreckung des Spektrometers auf eine Erstreckungsrichtung beschränkt werden. Dadurch wird das Spektrometer insbesondere hinsichtlich seiner Kompaktheit optimiert.

Die Detektionsvorrichtung kann jeweils ein Detektor, vorzugsweise ein Detektorchip und einen Monochromator zur spektralen Isolierung einer bestimmten Wellenlänge aus den Lichtstrahlen aufweisen. Der Monochromator kann dabei auf dem Detektor oder zwischen dem Detektor und der Lampe, d.h. z.B. vor dem Detektor mit Bezug zur Lampe, angeordnet sein. Durch den Monochromator können dabei Wellenlängen bzw. Wellenlängenbereiche des von der Probe herkommenden Lichts gefiltert werden, welche für die quantitative und/oder qualitative Bestimmung relevant sein können.

Der Detektor bzw. vorzugsweise der Detektorchip wertet dann dieses durch den Monochromator gefilterte Licht entsprechend aus.

Die Monochromatoren können jeweils eine rohrförmige Blende aufweisen, wobei jeweils die Blende den Monochromator derart durchläuft, dass die Blende mit einer ersten Blendenöffnung der Lampe gegenüberliegt und mit einer zweiten Blendenöffnung dem Detektor gegenüberliegt und vorzugsweise diesen zumindest teilweise umgreift. Vorzugsweise weist die Blende zumindest teilweise den gleichen Innendurchmesser auf wie das Probenbehältnis, vorzugsweise wie die Probenbehältnisse. Dies ist insbesondere derart zu verstehen, dass die Blende unterschiedliche Innendurchmesser aufweisen kann.

Die Lampe kann einen lichtdurchlässigen Kolben aufweisen, welcher die röhrenförmige Form der Lampe bildet und zudem die Lichtemissionszone umgibt. Vorzugsweise beinhaltet der Kolben ein die Lichtemissionszone erzeugendes Füllgas. In anderen Worten weist das Füllgas physikalische und/oder chemische Eigenschaften auf, durch welche die Lichtemissionszone erzeugt werden kann.

Ferner weist das Spektrometer ein die Lampe umgebendes Lampengehäuse zur Abgabe der Lichtstrahlen auf. In anderen Worten weist das Spektrometer vorzugsweise ein Lampengehäuse auf, welches derart ausgebildet ist, dass es zusammen mit der Lampe, d.h. insbesondere mit der Lichtemissionszone, die Lichtstrahlen abgeben kann. Auf diese Weise können die Lichtstrahlen besonders einfach abgegeben werden. Vorzugsweise weist das Lampengehäuse eine erste Öffnung zur Abgabe des ersten Lichtstrahls, eine zweite Öffnung zur Abgabe des zweiten Lichtstrahls und/oder eine weitere Öffnung zur Abgabe des weiteren Lichtstrahls und/oder eine zusätzliche Öffnung zur Abgabe des zusätzlichen Lichtstrahls auf. Die erste und die zweite Öffnung sind dabei besonders bevorzugt derart vorgesehen, dass eine erste (imaginäre) Gerade, welche durch die erste Öffnung und die erste Detektionsvorrichtung führt, und eine zweite (imaginäre) Gerade, welche durch die zweite Öffnung und die zweite Detektionsvorrichtung führt, sich in der Lampe und im gleichen Ursprung schneiden. Die weitere und die zusätzliche Öffnung sind bevorzugt derart vorgesehen, dass eine weitere (imaginäre) Gerade, welche durch die weitere Öffnung und die weitere Detektionsvorrichtung (D3) führt, und eine zusätzliche (imaginäre) Gerade, welche durch die zusätzliche Öffnung und die zusätzliche Detektionsvorrichtung führt, sich in der Lampe und im gleichen Ursprung schneiden. Durch ein derartiges Vorsehen der Öffnungen bzw. ein derartig bevorzugtes Vorsehen der Geraden mit Bezug zu den Öffnungen und den Detektionsvorrichtungen können die Lichtstrahlen besonders einfach und zuverlässig, d.h. insbesondere zuverlässig mit Bezug zum gleichen Ursprung, eingestellt werden. Das Lampengehäuse kann rund oder mehreckig ausgebildet sein. Vorzugsweise ist das Lampengehäuse dabei rechteckig vorgesehen.

Außerdem ist ein Verbindungsmittel zur Verbindung des Probenbehältnisses bzw. der Probenbehältnisse mit der Lampe vorgesehen.

Das Verbindungsmittel weist dabei eine dem Lampengehäuse, und dem jeweiligen Probenbehältnis korrespondierende Form auf. Durch die korrespondierende Form kann vorteilhaft erzielt werden, dass lediglich dieses Verbindungsmittel zur Verbindung des Probenbehältnisses mit der Lampe benötigt wird. D.h. durch die korrespondierende Form kann einzig das Verbindungsmittel zur Verbindung des Probenbehältnisses mit der Lampe vorgesehen sein. Dadurch werden insbesondere weitere Befestigungsmittel wie z.B. Schrauben oder dergleichen eingespart.

Das Spektrometer kann ferner einen das jeweilige Probenbehältnis umgebenden Mantel aufweisen. Ein derartiger Mantel kann insbesondere dann von Vorteil sein, wenn in dem jeweiligen Probenbehältnis ein erhöhter Druck, z.B. ein erhöhter Druck eines Gases, herrscht. Außerdem kann durch einen derartigen Mantel das Probenbehältnis sicher aufgenommen werden.

Das (jeweilige) Probenbehältnis kann Öffnungen zur Zuführung und/oder Entnahme der zu messenden Probe von außen aufweisen. "Außen" ist hierbei insbesondere als "außerhalb des Spektrometers" zu verstehen. Durch ein derartiges Vorsehen von Öffnungen im Probenbehältnis können insbesondere die Handhabungsschritte zum Vorsehen einer zu messenden Probe in dem jeweiligen Probenbehältnis reduziert werden. Das Probenbehältnis muss zudem nicht mehr aus dem Spektrometer entnommen werden. Außerdem kann dadurch eine unterbrechungsfreie Messung mehrerer unterschiedlicher Proben stattfinden.

Es kann insbesondere vorgesehen sein, dass die Öffnung zur Entnahme der Probe des Probenbehältnisses mit der Öffnung zur Zuführung der Probe des weiteren Probenbehältnisses fluidtechnisch miteinander verbunden ist, um die zu messende Probe zur quantitativen und/oder qualitativen Bestimmung durch die fluidtechnisch verbundenen Probenbehältnisse zu leiten. Dies ist wiederum sehr vorteilhaft für die Handhabungsschritte zur quantitativen und/oder qualitativen Bestimmung der zu messenden Probe, da die zu messende Probe unterbrechungsfrei, also kontinuierlich von dem Probenbehältnis in das weitere Probenbehältnis gelangt. Außerdem kann dadurch die Messung der Probe in den beiden Probenbehältnissen leicht automatisiert werden.

Die Lampe kann eine Plasmalampe, vorzugsweise eine Niederdruckplasmalampe oder eine Hockdruckplasmalampe, sein. Derartige Lampen eignen sich besonders gut zur Emission der vorgenannten Lichtstrahlen zur Messung der Probe.

Die Lichtemissionszone kann an den zwei Punkten jeweils eine Elektrode zur Bildung eines Lichtplasmas als Lichtemissionszone zwischen den Elektroden aufweisen. In anderen Worten können die Punkte derart ausgestaltet sein, dass zwischen den Punkten sich eine Potenzialdifferenz bildet. Vorzugsweise ist die Elektrode eine Topfelektrode; also eine topfförmige Elektrode. Durch Vorsehen der Topfelektrode - insbesondere im Vergleich zu bekannten Spitz(en)elektroden, bei denen sich der Lichtbogen zu den Elektroden hin einschnürt - kann unter Berücksichtigung der Anforderungen der Messung insbesondere der gleiche Ursprung sehr nahe an die Elektrode gebracht werden.

Die Lichtemissionszone kann zur Abgabe von wenigstens zwei weiteren Lichtstrahlen mit jeweils einem Ursprung auf der Lichtemissionszone vorgesehen sein, wobei jedem weiteren Lichtstrahl ein weiteres Probenbehältnis und eine weitere Detektionsvorrichtung zugeordnet ist. Es können also mit einer einzigen Lampe in Summe wenigstens drei Probenbehältnisse mit jeweiliger Detektionsvorrichtung beleuchtet werden. Es wird somit insbesondere ein sehr platzsparendes Spektrometer zur Messung einer Vielzahl von Probenbehältnisses bzw. Proben bereitgestellt.

Nachfolgend wird die Erfindung anhand der Figuren, in denen vorteilhafte Ausführungsbeispiele der Erfindung dargestellt sind, beispielhaft beschrieben. In den Zeichnungen zeigen:
- Figur 1: ein aus dem Stand der Technik bekanntes Spektrometer;
- Figur 2: ein Ausführungsbeispiel des erfindungsgemäßen Spektrometers;
- Figur 3: schematisch ein Ausführungsbeispiel des erfindungsgemäßen Spektrometers gemäß einem weiteren Aspekt der Erfindung; und
- Figur 4: schematisch ein weiteres Ausführungsbeispiel des erfindungsgemäßen Spektrometers gemäß dem weiteren Aspekt der Erfindung.

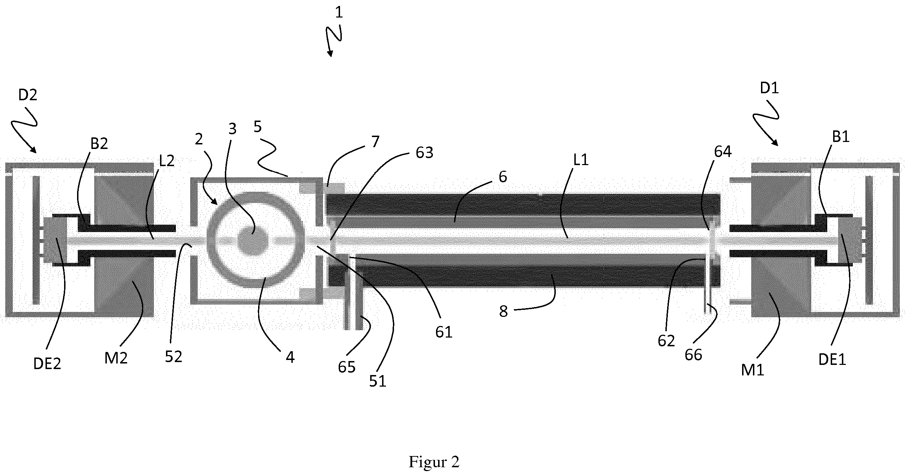

Figur 2 zeigt ein Ausführungsbeispiel eines erfindungsgemäßen Spektrometers. Das Spektrometer 1 weist eine sich im Wesentlichen rohrförmig erstreckende Lampe 2 auf. In Figur 2 erstreckt sich dabei die Lampe 2 beispielhaft in die Zeichenebene hinein. Rohrförmig ist dabei nicht auf die Art des Querschnittes beschränkt. Insbesondere ist jede Art des Querschnittes denkbar. Rohrförmig erstreckend ist dabei insbesondere derart zu verstehen, dass die Lampe 2 ihren Querschnitt entlang ihrer Erstreckungsrichtung nicht wesentlich ändert. Vorteilhafterweise weist die Lampe 2 einen ringförmigen Querschnitt auf. Der Querschnitt der Lampe 2 kann jedoch auch einen teilweise Kreis bzw. kreisringförmigen Querschnitt oder einen quaderförmigen Querschnitt aufweisen. Vorteilhafterweise weist die Lampe 2 einen ringförmigen bzw. runden Querschnitt auf, da bei dieser Form lediglich die Lage des später beschrieben gleichen Ursprungs auf der Lichtemissionszone 3, d.h. die Lage der Emissionszone, von hoher Priorität für die Messung ist. Die Lampe 2 kann eine Plasmalampe, vorzugsweise eine Niederdruckplasmalampe oder eine Hochdruckplasmalampe, sein.

Die Lampe 2 ist zur Bildung einer sich in Richtung der rohrförmigen Erstreckung und zwischen zwei Punkten erstreckenden Lichtemissionszone 3 im Spektrometer 1 vorgesehen. In der Figur 2 erstreckt sich dabei die Lichtemissionszone 3 beispielhaft punktförmig in die Zeichenebene hinein. Die Lampe 2 kann zudem einen die röhrenförmige Form bildenden lichtdurchlässigen Kolben 4 aufweisen, welcher die Lichtemissionszone 3 umgibt. Vorzugsweise weist der Kolben 4 zudem ein die Lichtemissionszone 3 erzeugendes Füllgas auf. Ein solches Füllgas weist dabei derartige physikalische und/oder chemische Eigenschaften auf, um die Lichtemissionszone 3 zu erzeugen. Die Erzeugung der Lichtemissionszone 3 kann dabei beispielhaft durch Klimmentladung erfolgen. Vorzugsweise weist die Lichtemissionszone 3 an den zwei Punkten jeweils eine Elektrode zur Bildung eines Lichtplasmas als Lichtemissionszone 3 zwischen den Elektroden auf. Vorzugsweise besteht zwischen den beiden Elektroden ein Potential, so dass durch dieses Potential die Lichtemissionszone 3 gebildet werden kann. Hierfür können die Elektroden bzw. die zwei Punkte an eine externe Spannungsquelle angeschlossen werden.

Vorzugsweise sind die Elektroden Topfelektroden. D.h. die Elektroden weisen insbesondere eine topf- bzw. napfförmige Form auf.

Die Lampe 2 und die Lichtemissionszone 3 geben einen ersten Lichtstrahl L1 und einen zweiten Lichtstrahl L2 mit einem gleichen Ursprung auf der Lichtemissionszone 3 ab. D.h. die Lampe 2 und Lichtemissionszone 3 sind vorzugsweise derart gestaltet, dass die beiden Lichtstrahlen L1 und L2 einen gleichen Ursprung auf der Lichtemissionszone 3 haben. Der gleiche Ursprung kann dabei auf der Lichtemissionszone 3 bezüglich einer der zwei Punkte mit einem Abstand vorgesehen sein. Mit Bezug zu Figur 2 erstreckt sich dieser Abstand beispielhaft in die Zeichenebene hinein. D.h. die Koordinate des gleichen Ursprungs kann sich in die Zeichenebene hinein bzw. hinaus ändern, bleibt jedoch entlang der Zeichenebene gleich. Der gleiche Ursprung kann auf der Lichtemissionszone 3 mit einem definierten Abstand zu einem der zwei Punkte vorgesehen sein. Der definierte Abstand beträgt vorzugsweise zumindest 1mm, besonders bevorzugt zumindest 2mm, ganz besonders bevorzugt zumindest 5mm..

Die Lichtstrahlen L1,L2 können jeweils einen Winkel von 0° bis 90° mit der Lichtemissionszone 3 einschließen. Die Lichtstrahlen L1,L2 können jeweils also eine Erstreckungskomponente aufweisen, welche parallel zur Lichtemissionszone 3 ist und eine Erstreckungskomponente aufweisen, welche senkrecht auf der Lichtemissionszone 3 steht. Die Lichtstrahlen L1,L2 können sich dabei unabhängig voneinander mit Bezug zur Lichtemissionszone 3 erstrecken. Vorzugsweise weist zumindest einer der Lichtstrahlen L1,L2 einen Winkel von 90° mit der Lichtemissionszone 3 auf. Besonders bevorzugt weisen beide Lichtstrahlen L1,L2 einen Winkel von 90° mit der Lichtemissionszone 3 auf. In letzterem Fall erstrecken sich also beide Lichtstrahlen L1,L2 in einer gemeinsamen Ebene, welche sich senkrecht zur Erstreckung der Lichtemissionszone 3 erstreckt. Im Ausführungsbeispiel in Figur 2 ist dies beispielhaft die Zeichenebene, welche senkrecht auf der Lichtemissionszone 3 steht bzw. der Normalenvektor der Zeichenebene entspricht dabei der Erstreckungsrichtung der Lichtemissionszone 3. Es kann jedoch auch vorgesehen sein, dass die Lichtstrahlen L1,L2 in einer gemeinsamen Ebene vorgesehen sind, wobei diese gemeinsame Ebene nicht senkrecht zur Lichtemissionszone 3 bzw. dessen Erstreckungsrichtung ist. In diesem Fall schließt diese gemeinsame Ebene einen Winkel mit der Zeichenebene der Figur 2 ein. Dieser Winkel kann einen Winkel von 0° bis 90° einschließen.

Zudem können die Lichtstrahlen L1, L2 einen Winkel einschließen. Der Winkel kann bis 180° betragen. Vorzugsweise beträgt der Winkel, wie beispielhaft in Figur 2 gezeigt, einen Winkel von 180° auf. Es kann jedoch auf vorgesehen sein, dass der Winkel 45° oder 90° oder 135° beträgt. Figur 2 zeigt eine besonders vorteilhafte Anordnung, in der die gemeinsame Ebene, in welcher die Lichtstrahlen L1, L2 vorgesehen sind, sich senkrecht zur Erstreckung der Lichtemissionszone 3 erstreckt, und in der die Lichtstrahlen L1,L2 einen Winkel einschließen, der 180° beträgt. Durch diese Anordnung wird eine sehr platzsparende Anordnung des Spektrometers erzielt.

Im Strahlengang des ersten Lichtstrahls L1 ist ein Probenbehältnis 6 zur Aufnahme einer zu messenden Probe angeordnet. Das Probenbehältnis 6 weist vorzugsweise eine symmetrische Form, wie z.B. eine zylindrische Form, auf. Vorzugsweise weist das Probenbehältnis 6 die Form einer Küvette auf. Das Probenbehältnis 6 ist vorzugsweise derart ausgebildet, dass es eine gas- und/oder flüssigförmige Probe aufnehmen kann. Diese Proben können insbesondere Dämpfe von Elementen wie Quecksilber (Hg) sein. Das Spektrometer eignet sich jedoch generell auch für alle anderen gas- und/oder flüssigförmigen Proben. Vorzugsweise erstreckt sich die Erstreckungsrichtung des Probenbehältnisses 6 in Richtung des Lichtstrahls L1. Vorzugsweise fällt eine Achse, besonders bevorzugt die Symmetrieachse, des Probenbehältnisses 6 mit dem Lichtstrahl L1 zusammen. Das Probenbehältnis kann an seinem Ende und Anfang jeweils einen Deckel 63,64 aufweisen. Der Lichtstrahl L1 tritt dabei vorzugsweise durch den Deckel 63 in das Probenbehältnis 6 ein und tritt durch den Deckel 64 aus den Probenbehältnis 6 aus. Das Probenbehältnis 6 kann zudem Öffnungen 61, 62 zur Zuführung und/oder Entnahme der zu messenden Probe von außen aufweisen. Diese Öffnungen 61, 62 sind vorteilhafterweise jeweils am Anfang und am Ende des Probenbehältnisses 6 vorgesehen. Es kann zudem vorgesehen sein, dass das Probenbehältnis 6 ein einen das Probenbehältnis 6 umgebenden Mantel 8 aufweist. Der Mantel 8 weist vorzugweise eine dem Probenbehältnis 6 korrespondierende Form auf. Insbesondere kann vorgesehen sein, dass der Mantel 8 Aussparungen für die Öffnungen 61, 62 aufweist. In den Aussparungen können Zuführ- und/oder Entnahmelemente 65, 66 vorgesehen sein, welche fluchtend mit den Öffnungen 61, 62 in dem Mantel 8 vorgesehen sein können. Die Elemente 65, 66 können mit einer externen Zuführ- und/oder Entnahmevorrichtung verbunden werden. Der Mantel 8 weist vorzugsweise ein druckresistentes Material auf.

In Richtung des ersten Lichtstrahls L1 ist eine erste Detektionsvorrichtung D1 zur quantitativen und/oder qualitativen Bestimmung der in dem Probenbehältnis 6 zu messenden Probe auf Basis einer Wechselwirkung zwischen der zu messenden Probe und dem ersten Lichtstrahl vorgesehen. D.h. wird der erste Lichtstrahl L1 gedanklich fortgeführt, so befindet sich die erste Detektionsvorrichtung in dieser gedanklichen Fortführung des Lichtstrahls L1. Es kann je nach Art der Wechselwirkung auch sein, dass zumindest ein Teil des ersten Lichtstrahls L1, d.h. insbesondere ein geschwächter Lichtstrahl, in Richtung des Lichtstrahls L1 und aus dem Probenbehältnis 6 entweicht, und die Detektionsvorrichtung D1 innerhalb dieses Teils des Lichtstrahls als L1 angeordnet ist. Vorzugweise ist dabei das Probenbehältnis zwischen der Detektionsvorrichtung D1 und der Lampe 2 angeordnet.

In Richtung des zweiten Lichtstrahls L2 ist eine zweite Detektionsvorrichtung D2 zur Referenzierung der quantitativen und/oder qualitativen Bestimmung der zu messenden Probe auf Basis des zweiten Lichtstrahls L2 vorgesehen. Vorzugweise erreicht der Lichtstrahl L2 komplett die Detektionsvorrichtung D2, sodass die Detektionsvorrichtung D2 in dem zweiten Lichtstrahl L2 angeordnet ist. Es kann jedoch auch vorgesehen sein, dass nur ein Teil des Lichtstrahls L2 die Detektionsvorrichtung D2 erreicht, und die Detektionsvorrichtung D2 in diesem Teil des Lichtstrahls L2 angeordnet ist.

Zwischen der zweiten Detektionsvorrichtung D2 und der Lampe 2 kann ein Referenzbehältnis mit einer Referenzflüssigkeit vorgesehen sein. Die Referenzierung der quantitativen und/oder qualitativen Bestimmung der zu messenden Probe kann zusätzlich oder alternativ zur Referenzierung auf Basis des zweiten Lichtstrahls L2 auf Basis einer Wechselwirkung zwischen der Referenzflüssigkeit und dem zweiten Lichtstrahl L2 erfolgen. Ein solches Referenzbehältnis ist jedoch nur optional und daher in dem Ausführungsbeispiel in der Figur 2 der Übersicht halber nicht dargestellt. Gemäß der Ausführungsform mit Referenzbehältnis kann vorgesehen sein, dass die Ausgestaltung und/oder Anordnung gemäß dem Probenbehältnis 6 erfolgt, wobei jedoch anstatt der zu messenden Probe die Referenzflüssigkeit in dem Referenzbehältnis vorgesehen ist.

Die Detektionsvorrichtungen D1, D2 können jeweils einen Detektor DE1 bzw. DE2 aufweisen. Die Detektionsvorrichtung D1, vorzugsweise der Detektor DE1, ist vorzugsweise dazu eingerichtet auf Basis der Wechselwirkung zwischen der zu messenden Probe und dem ersten Lichtstrahl L1 eine Charakteristik, d.h. insbesondere eine quantitative und/oder qualitative Charakteristik, der zu messenden Probe festzustellen. Insbesondere kann vorgesehen sein, dass die Detektionsvorrichtungen D1, D2 jeweils mit einer Recheneinheit, wie zum Beispiel einem Computer, verbunden sind, über welchen die entsprechenden quantitativen und/oder qualitativen Ergebnisse der Messung ausgelesen werden können. Die Detektoren DE1, DE2 sind jeweils vorzugsweise ein Detektorchip.

Ferner weisen die Detektionsvorrichtungen D1, D2 vorzugsweise einen Monochromator M1, M2, besonders bevorzugt jeweils in Form eines Interferenz-Filtersystems, zur spektralen Isolierung einer bestimmten Wellenlänge aus den Lichtstrahlen L1, L2 auf. In anderen Worten kann durch die Monochromatoren M1, M2 jeweils eine selektive spektrale Betrachtung erreicht werden, was durch Abschneiden nicht benötigter Spektralbereiche erfolgt. Vorzugsweise sind die Monochromatoren M1, M2 jeweils auch mit einer Recheneinheit verbunden, sodass die Recheneinheit jeweils die bestimmte Wellenlänge, welche spektral isoliert werden soll, einstellen kann. Vorzugsweise ist die Recheneinheit dieselbe Recheneinheit, welche mit den Detektoren DE1, DE2 verbunden ist. Es kann also eine Recheneinheit für alle Detektoren DE1, DE2 und alle Monochromatoren M1, M2 verwendet werden. Es kann auch vorgesehen sein, dass für jedes Element eine unabhängige Recheneinheit vorgesehen ist. Vorzugsweise ist jeweils der Monochromator M1, M2 auf dem Detektor oder zwischen Detektor DE1 bzw. DE2 und Lampe 2 angeordnet. Es kann auch vorgesehen sein, dass die Monochromatoren M1, M2 jeweils die Detektoren DE1, DE2 aufnehmen und vorzugsweise umschließen.

Wie aus Figur 2 ersichtlich, können die Monochromatoren M1, M2 jeweils eine rohrförmige Blende B1, B2 aufweisen, wobei jeweils die Blende B1, B2 den Monochromator M1, M2 vorzugsweise derart durchläuft, dass die Blende B1, B2 mit einer ersten Blendenöffnung der Lampe 2 gegenüberliegt. Vorzugsweise ist zwischen der ersten Blendenöffnung und der Lampe 2 dabei ein Abstand vorgesehen. Die zweite Blendenöffnung kann dem Detektor DE1 bzw. dem Detektor DE2 gegenüberliegen. Bevorzugt umgreift die zweite Blendenöffnung den Detektor DE1 bzw. DE2 zumindest teilweise. Besonders bevorzugt werden die Detektoren DE1, DE2 jeweils von der zweiten Blendenöffnung aufgenommen. Die Blenden B1, B2 weisen besonders bevorzugt zumindest teilweise den gleichen Innendurchmesser wie das Probenbehältnis 6 auf. In Figur 2 verläuft der Innendurchmesser der Blenden B1, B2 jeweils stufenförmig. Gemäß dieser bevorzugten Ausführungsform hat die Blende B1, bzw. B2 zwei Innendurchmesser, wobei ein Innendurchmesser derart bemessen ist, dass er den Detektor DE1 bzw. DE2 aufnehmen kann. Der zweite Innendurchmesser hat dabei bevorzugt denselben Innendurchmesser wie das Probenbehältnis 6. Vorzugsweise sind die Blenden B1, B2 jeweils als apertur-begrenzende Blenden ausgebildet.

Das Spektrometer weist ferner ein die Lampe 2 umgebendes Lampengehäuse 5 zur Abgabe der Lichtstrahlen L1, L2 auf. D.h. das Lampengehäuse 5 ist vorzugweise derart gestaltet, dass es die Lichtstrahlen L1, L2 bzw. die Orientierung derselben erzeugen kann. Hierfür kann das Lampengehäuse 5 eine erste Öffnung 51 zur Abgabe des ersten Lichtstrahls L1 und eine zweite Öffnung 52 zur Abgabe des zweiten Lichtstrahls L2 aufweisen. Die Öffnungen 51, 52 sind bevorzugt derart vorgesehen, dass eine erste Gerade, welche durch die erste Öffnung 51 und die erste Detektionsvorrichtung D1 führt, und eine zweite Gerade, welche durch die zweite Öffnung 52 und die zweite Detektionsvorrichtung D2 führt, sich in der Lampe 2 und im gleichen Ursprung schneiden. In anderen Worten:die erste Gerade fällt vorzugsweise mit dem ersten Lichtstrahl L1 zusammen, und die zweite Gerade fällt vorzugsweise mit dem zweiten Lichtstrahl L2 zusammen. Die erste Öffnung 51 liegt dabei bevorzugt zwischen Lampe 2 und Detektionsvorrichtung D2. Die erste Öffnung 51 liegt dabei bevorzugt zwischen dem Probenbehältnis 6 und der Lampe 2. Das Lampengehäuse 5 kann rund oder mehreckig ausgebildet sein. Besonders bevorzugt ist, wie in Figur 2 dargestellt, das Lampengehäuse rechteckig ausgebildet. Das Lampengehäuse erstreckt sich dabei vorzugsweise zumindest über die Erstreckungsrichtung der Lampe 2.

Wie in Figur 2 beispielhaft dargestellt, weist das Spektrometer 1 zudem ein Verbindungsmittel 7 zur Verbindung des Probenbehältnisses 6 der mit Lampe 2 auf. Das Verbindungsmittel 7 weist eine dem Lampengehäuse 5 und dem Probenbehältnis 6 korrespondierende Form auf. Hierfür ist das Verbindungsmittel 7 derart ausgebildet, dass auf dessen Außendurchmesser das Lampengehäuse 5 aufgenommen wird, und in dessen Innendurchmesser das Probenbehältnis 6, vorzugweise der Mantel 8, aufgenommen wird.

Im Folgenden soll noch ein beispielhaftes Verfahren zur quantitativen und/oder qualitativen Bestimmung einer in dem Probenbehältnis 6 zu messenden Probe beschrieben werden. Hierfür wird zunächst die messende Probe in dem Probenbehältnis 6 eingeführt. Die zu messende Probe ist hierbei in der Regel ein Gas, insbesondere ein unbekanntes Mengenverhältnis von zumindest zwei Gasen, wie zum Beispiel Quecksilber. Durch das Spektrometer 1 sollen dabei die quantitativen und/oder qualitativen Eigenschaften dieser Probe, d.h. insbesondere ein Mengenverhältnis bestimmter Gase, ermittelt bzw. bestimmt werden. Der erste Lichtstrahl L1 wird dabei durch diese zu messende Probe geführt. Die der dem Probenbehältnis 6 nachgeschaltete Detektionsvorrichtung D1 erkennt die Wechselwirkung zwischen der zu messenden Probe und dem ersten Lichtstrahl L1. Eine mit der Detektionsvorrichtung D1 verbundene Recheneinheit kann daraufhin das Spektrum der zu messenden Probe abbilden. Da dieses Spektrum ein Rauschen aufweisen kann, wird ein zweiter Lichtstrahl L2, welcher den selben bzw. den gleichen Ursprung auf der Lichtemissionszone 3 hat wie der erste Lichtstrahl L1, um insbesondere dieselben Lichtcharakteristiken aufzuweisen, auf die zweite Detektionsvorrichtung D2 geleitet. Das Spektrum des zweiten Lichtstrahls L2 wird daraufhin ebenfalls durch die zweite Detektionsvorrichtung D2 abgebildet. Die beiden Spektren können daraufhin zusammengeführt, um ein rauschfreies Spektrum der zu messenden Probe zu erzeugen. Auf Basis dieses rauschfreien Spektrums können daraufhin die quantitativen und/oder qualitativen Eigenschaften der zu messenden Probe, d.h. insbesondere die Mengenverhältnisse der Probe beispielsweise als Gasverteilungskurve, interpretiert werden.

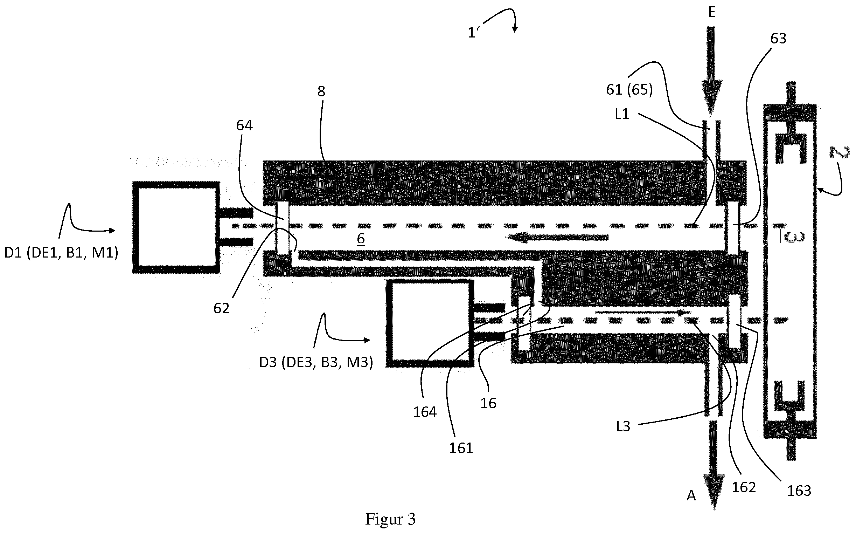

Figur 3 zeigt ein Ausführungsbeispiel eines erfindungsgemäßen Spektrometers 1' gemäß einem weiteren (zweiten) Aspekt der Erfindung. Das Spektrometer 1' weist dabei ebenso die sich im wesentlichen rohrförmig erstreckende Lampe 2 zur Bildung der sich in Richtung der rohrförmigen Erstreckung und zwischen den zwei Punkten erstreckenden Lichtemissionszone 3 zur Abgabe des ersten Lichtstrahls L1 auf. Die Abgabe des zweiten Lichtstrahls L2 ist bei dem Spektrometer 1' nicht zwingend. Ferner weißt das Spektrometer 1' auch das im Strahlengang des ersten Lichtstrahls L1 angeordnete Probenbehältnis 6 zur Aufnahme einer zu messenden Probe auf. In Richtung des ersten Lichtstrahls L1 ist ferner die erste Detektionsvorrichtung D1 zur quantitativen und/oder qualitativen Bestimmung der in dem Probenbehältnis 6 zu messenden Probe auf Basis einer Wechselwirkung zwischen der zu messenden Probe und dem ersten Lichtstrahl L1 vorgesehen.

Die Lampe 2 des Spektrometers 1' ist nunmehr vorgesehen, um einen weiteren Lichtstrahl L3 mit einem (von dem Lichtstrahl L1 unterschiedlichen also anderen) Ursprung auf der Lichtemissionszone 3 abzugeben. D.h., dass in dieser Ausführungsform nun der erste Lichtstrahl L1 und der weitere Lichtstrahl L3 jeweils einen (separaten) Ursprung auf der Lichtemissionszone 3 haben. Es kann jedoch auch vorgesehen sein, dass die Lichtstrahlen L1, L3 einen gleichen bzw. den selben Ursprung auf der Lichtemissionszone 3 haben. Hierbei kann vorzugsweise vorgesehen sein, dass die Ursprünge auf der Lichtemissionszone 3 beabstandet voneinander vorgesehen sind. Hierdurch kann die Lampe 2 bzw. die Lichtemissionszone 3 zwei voneinander unabhängige Lichtstrahlen L1 und L3 abgeben, welche parallel zueinander ausgerichtet sind und/oder in die gleiche Richtung zeigen. Es kann jedoch auch vorgesehen sein, dass die Lichtstrahlen in unterschiedliche Richtungen zeigen und/oder nicht parallel zueinander ausgerichtet sind.

Zur Abgabe der Lichtstrahlen L1, L3 kann das zuvor beschriebene Lampengehäuse 5 vorgesehen sein. Hierbei kann vorgesehen sein, dass das Lampengehäuse 5 eine weitere Öffnung (nicht dargestellt) zur Abgabe des weiteren Lichtstrahls aufweist. D.h., die erste Öffnung 51 und die weitere Öffnung sind in Richtung der Erstreckung Lichtemissionszone 3 (zwischen den Punkten) beabstandet voneinander vorgesehen, um die Lichtstrahlen L1, L3 abzugeben. Da jedoch der Ursprung der Lichtstahlen L1, L3 auf der Lichtemissionszone 3 nicht von Relevanz ist, kann auch einfachhalber vorgesehen sein, dass die Probenbehältnisse 6, 16 mit ihrer jeweiligen Detektionsvorrichtung D1 bzw. D3 jeweils entlang eines der von der Lampe 3 abgegebenen Lichtstrahlen angeordnet werden.

Wie Figur 3 außerdem erkennen lässt, ist im Strahlengang des weiteren Lichtstrahls L3 ein weiteres Probenbehältnis 16 zur Aufnahme einer zu messenden Probe vorgesehen. Das Probenbehältnis 16 ist dabei im Wesentlichen, d.h. insbesondere bis auf seine Länge, wie das Probenbehältnis 6 ausgestaltet, sodass das bzgl. des Probenbehältnisses 6 Gesagte in entsprechender Weise für das Probenbehältnis 16 gilt. In Figur 3 ist insbesondere auch erkennbar, dass das Probenbehältnis 16 in seiner Erstreckung in Richtung entlang des Lichtstrahls L3 sich von der Erstreckung des Probenbehältnisses 6 in Richtung des Lichtstrahls L1 unterscheidet. Vorzugsweise unterscheiden sich die Erstreckungen dabei derart, dass die Erstreckung des Weiteren Probenbehältnisses 16 in Richtung des weiteren Lichtstrahls L3 kürzer ist als die Erstreckung des Probenbehältnisses 6 in Richtung des ersten Lichtstrahls L1, was gewisse Vorteile - welche im Folgenden noch näher beschrieben werden - hinsichtlich der quantitativen und/oder qualitativen Bestimmung der zu messenden Probe mit sich bringt.

Das zuvor beschriebene Verbindungsmittel 7 verbindet entweder auch das Probenbehältnis 16 mit der Lampe 2 oder ein weiteres Verbindungsmittel, welches entsprechend dem Verbindungsmittel 7 ausgestaltet ist, verbindet das Probenbehältnis 16 mit der Lampe 2.

Der zuvor beschriebene Mantel 8 oder ein für das Probenbehältnis 16 separat vorgesehener weiterer Mantel, welcher entsprechend dem zuvor beschriebenen Mantel 8 ausgestaltet ist, kann das Probenbehältnis 16 umgeben. Vorzugsweise weist das Spektrometer 1' einen einzigen Mantel 8 auf, welcher die Probenbehältnisse 6, 16 zusammen umgibt.

Das weitere Probenbehältnis 16 kann ferner an seinem Ende und Anfang jeweils einen Deckel (Fenster) 163, 164 aufweisen. Diese sind im Wesentlichen entsprechend der Deckel 63, 64 ausgestaltet, sodass das bzgl. der Deckel 63, 64 gesagte in entsprechender Weise für die Deckel 163, 164 gilt.

In Richtung des weiteren Lichtstrahls L3 ist eine weitere Detektionsvorrichtung D3 zur quantitativen und/oder qualitativen Bestimmung der in dem weiteren Probenbehältnis 16 zu messenden Probe auf Basis einer Wechselwirkung zwischen der zu messenden Probe und dem weiteren Lichtstrahl L3 vorgesehen. Die Detektionsvorrichtung D3 entspricht dabei im Wesentlichen der zuvor beschriebenen Detektionsvorrichtung D1 bzw. D2, sodass das bzgl. der Detektionsvorrichtung D1 bzw. D3 gesagte in entsprechender Weise für die weitere Detektionsvorrichtung D3 gilt. Das heißt insbesondere, dass die Detektionsvorrichtung D3 ebenfalls einen Detektor DE3, vorzugsweise einen Detektorchip, und einen Monochromator M3 aufweisen kann. Das bzgl. des Detektors DE1 bzw. DE2 und bzgl. des Monochromators M1 bzw. M2 Gesagte gilt somit in entsprechender Weise für den Detektor DE3 und dem Monochromator M3. Der Monochromator M3 kann ferner eine Blende B3 aufweisen, welche entsprechend der zuvor beschriebenen Blende B1 bzw. B2 ausgestaltet ist.

Wie die Figur 3 ebenfalls erkennen lässt, kann durch die unterschiedliche, insbesondere hinsichtlich der Länge unterschiedlich vorgesehene Erstreckung der Probenbehältnisse 6, 16 auch der Abstand der Detektionsvorrichtungen D1, D3 zur Lampe 3 unterschiedlich sein. Es kann somit insbesondere vorgesehen sein, dass die Detektionsvorrichtung D3 näher an der Lampe 3 angeordnet ist als die Detektionsvorrichtung D1.

In Figur 3 ist beispielhaft dargestellt, dass die Probenbehältnisse 6,16 fluidtechnisch miteinander verbunden sein können, so dass die zu messende Probe zur quantitativen und/oder qualitativen Bestimmung durch die fluidtechnisch verbundenen Probenbehältnisse 6, 16 geleitet werden kann. Die Probenbehältnisse 6, 16 sind zur Bereitstellung dieser fluidtechnischen Verbindung dabei vorzugsweise in Reihe geschaltet, sodass die zu messende Probe die Probenbehältnisse 6, 16 der Reihe nach durchläuft. Zur Veranschaulichung dieser fluidtechnischen Verbindung sind in der Figur 3 die Pfeile E (Zuführrichtung) und A (Entnahmerichtung) sowie die in den Probenbehältnissen 6, 16 dargestellten Pfeile dargestellt. Es kann insbesondere vorgesehen sein, dass das weitere Probenbehältnis 16 ebenfalls Öffnungen 161, 162, welche entsprechend den Öffnungen 61, 62 ausgestaltet sind, aufweisen kann. Die Öffnung 161 ist dabei zur Zuführung der zu messenden Probe in das Probenbehältnis 16 vorgesehen. Die Öffnung 161 ist beispielsweise am unteren Ende des Probenbehältnisses 16, also vorzugsweise auf Seiten der Detektionsvorrichtung D3 vorgesehen. Die Öffnung 162 ist zur Entnahme der zu messenden Probe von dem Probenbehältnis 16 und von außen vorgesehen. Die Öffnung 162 ist beispielsweise am oberen Ende des Probenbehältnisses 16, also vorzugsweise auf Seiten der Lampe 2, d.h. näher an der Lampe 2 als die Öffnung 161, vorgesehen. Es kann somit vorgesehen sein, dass zur vorgenannten fluidtechnischen Verbindung des ersten Probenbehältnisses 6 mit dem weiteren Probenbehältnis 16 die Öffnung 62 mit der Öffnung 161 fluidtechnisch verbunden ist. Zur fluidtechnischen Verbindung der Öffnungen 62, 161 kann ein diese Öffnungen verbindender Kanal, welcher vorzugsweise in dem Mantel 8 vorgesehen bzw. ausgestaltet ist, vorgesehen sein. Eine zu messende Probe gelangt somit zunächst über die Öffnung 61 in das Probenbehältnis 6 und wird dort quantitativ und/oder qualitativ bestimmt. Nachdem die zu messende Probe in dem Probenbehältnis 6 quantitativ und/oder qualitativ bestimmt wurde, gelangt die zu messende Probe über die Öffnung 62 und die Öffnung 161 in das weitere Probenbehältnis 16, wo die zu messende Probe nochmals quantitativ und/oder qualitativ bestimmt wird. Hierdurch erhält man eine besonders genaue quantitative und/oder qualitative Bestimmung der zu messenden Probe. Dieser Effekt wird außerdem verstärkt, wenn die Probenbehältnisse 6, 16 sich in ihrer Erstreckung entlang des jeweiligen Lichtstrahls unterscheiden (siehe oben). Die in der Figur 3 dargestellten Pfeile verdeutlichen den Verlauf des Gangs der zu messenden Probe durch das Spektrometer 1' bzw. die Probenbehältnisse 6, 16. Der Pfeil E lässt erkennen, dass die zu messende Probe über das Probenbehältnis 6 bzw. die Öffnung 61 in das Spektrometer 1' (von außen) gelangt. Der Pfeil A lässt erkennen, dass die zu messende Probe das Spektrometer 1' über das Probenbehältnis 16 bzw. die Öffnung 162 (nach außen) verlässt.

Es kann ferner eine nicht dargestellte Zuführ- und Entnahmeeinrichtung vorgesehen sein, welche die zu messende Probe dem Spektrometer 1' zuführt und entnimmt, insbesondere derart, dass die zu messende Probe zunächst in dem Probenbehältnis 6 und anschließend im weiteren Probenbehältnis 16 quantitativ und/oder qualitativ bestimmt wird. Diese Einrichtung kann eine an der Öffnung 61 und/oder Öffnung 162 vorgesehene, einen Über- und/oder Unterdruck erzeugende Vorrichtung wie beispielsweise eine Pumpeneinheit sein. Mittels der Zuführ- und Entnahmeeinrichtung ist es somit insbesondere möglich, dass die zu messende Probe den durch die Pfeile angedeuteten Gang (vgl. Figur 3) durch das Spektrometer 1', insbesondere durch die Probenbehältnisse 6, 16 durchlaufen kann.

Es kann ferner vorgesehen sein, dass die Detektionsvorrichtungen D1, D3 jeweils mit einer Recheneinheit, wie z.B. einem Computer verbunden sind, über welchen die über die Detektionsvorrichtungen D1, D3 bestimmten quantitativen und/oder qualitativen Ergebnisse der Messungen ausgelesen werden können bzw. in dieser verarbeitet werden können. Es kann somit bspw. vorgesehen sein, dass die Recheneinheit die quantitativen und/oder qualitativen Bestimmungen der Detektionsvorrichtungen D1, D3 zusammenführt, um somit die zu messende Probe quantitativ und/oder qualitativ zu bestimmen. Es kann somit bspw. aus den Ergebnissen der Detektionsvorrichtungen D1, D3 ein einziges Ergebnis der quantitativen und/oder qualitativen Bestimmung berechnet werden, welches eine sehr hohe Aussagekraft bzw. Güte hat.

Das Spektrometer 1' kann zusätzlich die zuvor beschriebene Referenzierungseinrichtung (Lichtstrahl L2 mit zweiter Detektionsvorrichtung D2 etc.) zur Referenzierung der quantitativen und/oder qualitativen Bestimmung der zu messenden Probe aufweisen. Die Lampe 2 bzw. die Lichtemissionszone 3 ist dabei also insbesondere vorgesehen, um neben den Lichtstrahlen L1 und L3 einen zusätzlichen Lichtstrahl (bspw. den zuvor beschriebenen Lichtstrahl L2; d.h., die Ausführungen für den ersten und zweiten Lichtstrahl L1, L2 gelten in entsprechender Weise für den weiteren Lichtstrahl L3 und den zusätzlichen Lichtstrahl) abzugeben, um die in den Probenbehältnissen 6 und/oder 16 zu messende Probe auf Basis des zusätzlichen Lichtstrahls zu referenzieren. Der weitere Lichtstrahl L3 und der zusätzliche Lichtstrahl haben dann den gleichen Ursprung auf der Lichtemissionszone 3, wobei das Spektrometer wenigstens für eine, mehrere oder alle weiteren Detektionsvorrichtungen ferner aufweist: eine in Richtung des zusätzlichen Lichtstrahls angeordnete zusätzliche Detektionsvorrichtung zur Referenzierung der quantitativen und/oder qualitativen Bestimmung der zu messenden Probe auf Basis des zusätzlichen Lichtstrahls. Vorzugsweise ist zwischen der zusätzlichen Detektionsvorrichtung und der Lampe 2 ein zusätzliches Referenzbehältnis mit einer Referenzflüssigkeit vorgesehen, und wobei die Referenzierung der quantitativen und/oder qualitativen Bestimmung der zu messenden Probe auf Basis einer Wechselwirkung zwischen der Referenzflüssigkeit und dem zusätzlichen Lichtstrahl erfolgt. Die zuvor beschriebenen Ausführungen zur Referenzierung der quantitativen und/oder qualitativen Bestimmung mittels des ersten Lichtstrahls L1 gelten somit in entsprechender Weise zur Referenzierung der quantitativen und/oder qualitativen Bestimmung mittels des Lichtstrahls L1 und/oder des Lichtstrahls L3.

Ebenso kann vorgesehen sein, dass die Lichtemissionszone 3 des Spektrometers 1 zur Abgabe des weiteren Lichtstrahls L3 vorgesehen ist, wobei der erste Lichtstrahl L1 und der weitere Lichtstrahl L3 jeweils einen Ursprung auf der Lichtemissionszone 3 haben, wobei das Spektrometer 1 ferner das im Strahlengang des weiteren Lichtstrahls L3 angeordnete weitere Probenbehältnis 16 zur Aufnahme einer zu messenden Probe, und die in Richtung des weiteren Lichtstrahls L3 angeordnete weitere Detektionsvorrichtung D3 zur quantitativen und/oder qualitativen Bestimmung der in dem weiteren Probenbehältnis 16 zu messenden Probe auf Basis einer Wechselwirkung zwischen der zu messenden Probe und dem weiteren Lichtstrahl L3 aufweist.

Es kann ferner vorgesehen sein, dass das Spektrometer 1' zwei weitere Probenbehältnisse aufweist, also neben dem weiteren Probenbehältnis 16 noch ein weiteres Probenbehältnis. Die Lichtemissionszone 3 ist dann zur Abgabe von wenigstens zwei weiteren Lichtstrahlen mit jeweils einem Ursprung auf der Lichtemissionszone 3 vorgesehen bzw. das noch weitere Probenbeältnis wird entsprechend der Probenbehältnisse 6, 16 von der Lampe 2 beleuchtet. Das noch weitere Probenbehältnis weist somit - wie die Probenbehältnisse 6, 16 - eine (noch weitere) Detektionsvorrichtung auf. Das bzgl. der Probenbehältnisse 6 bzw. 16, der Lichtstrahlen L1 bzw. L3 und der Detektionsvorrichtungen D1 bzw. D3 Gesagte gilt somit in entsprechender Weise für dieses Probenbehältnis mit entsprechender Detektionsvorrichtung. Dieses Probenbehältnis kann somit wiederum mit dem Probenbehältnis 16 entsprechend der fluidtechnischen Verbindung zwischen Probenbehältnis 6 und 16 fluidtechnisch verbunden sein. Mit anderen Worten: Ein Probenbehältnis ist mit dem jeweils weiteren Probenbehältnis fluidtechnisch verbunden bzw. die Probenbehältnisse sind in Reihe miteinander fluidtechnisch verbunden. Auf diese Weise können die vorgenannten vorteilhaften Effekte, d.h. insbesondere eine hohe Genauigkeit der quantitativen und/oder qualitativen Bestimmung der zu messenden Probe, noch weiter verstärkt werden.

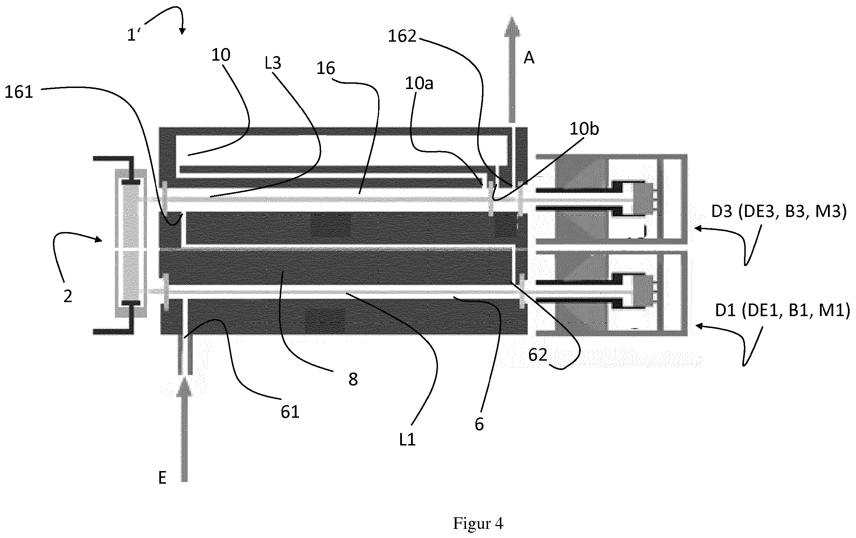

Wie in Figur 4 dargestellt, kann das Spektrometer 1' ferner ein Pufferbehälter 10 aufweisen, welcher mit dem letzten bzw. weiteren Probenbehältnis 16 (und/oder Probenbehältnis 6) fluidtechnisch verbunden ist. Der Pufferbehälter 10 bewirkt dabei eine Vergrößerung des Volumens des Probenbehältnisses 16 und weist vorzugsweise kein Ausgang nach außerhalb vom Spektrometer 1' auf. Das Probenbehältnis 16 kann über vorzugsweise zwei Öffnungen 10a, 10b mit dem Pufferbehälter 10 fluidtechnisch verbunden sein, welche zur Zuführung bzw. Entnahme der zu messenden Probe in bzw. aus dem Pufferbehälter 10 vorgesehen sind. Der Pufferbehälter 10 ist dabei mit dem weiteren Probenbehältnis 16 vorzugsweise derart fluidtechnisch verbunden, dass die zu messende Probe zunächst (über die Öffnung 161) in das Probenbehältnis 16 gelangt, nach der Wechselwirkung mit dem Lichtstrahl L3 und der quantitativen und/oder qualitativen Bestimmung (über die Öffnung 10a) in den Pufferbehälter gelangt und dort gepuffert bzw. zwischengelafert wird, und anschließend (über die Öffnung 10b) wieder in das Probenbehältnis 16 gelangt. Im Probenbehältnis 16 wieder angekommen, kann die zu messende Probe schließlich nach außerhalb vom Spektrometer 1', bspw. über die Öffnung 162, entweichen.

Im Folgenden soll noch ein beispielhaftes Verfahren zur quantitativen und/oder qualitativen Bestimmung einer in den Probenbehältnissen 6, 16 bzw. in dem Spektrometer 1' zu messenden Probe beschrieben werden. Hierfür wird zunächst die zu messende Probe in das Probenbehältnis 6 eingeführt. Die zu messende Probe ist hierbei in der Regel ein Gas, insbesondere ein unbekanntes Mengenverhältnis von zumindest zwei Gasen, wie zum Beispiel Quecksilber. Durch das Spektrometer 1' sollen dabei die quantitativen und/oder qualitativen Eigenschaften dieser Probe, d.h. insbesondere ein Mengenverhältnis bestimmter Gase, ermittelt bzw. bestimmt werden. Der erste Lichtstrahl L1 wird dabei durch das Probenbehältnis 6 und diese zu messende Probe geführt. Die der dem Probenbehältnis 6 nachgeschaltete Detektionsvorrichtung D1 erkennt die Wechselwirkung zwischen der zu messenden Probe und dem ersten Lichtstrahl L1. Eine mit der Detektionsvorrichtung D1 verbundene Recheneinheit kann daraufhin das Spektrum der zu messenden Probe abbilden. Die zu messende Probe wird sodann über die fluidtechnische Verbindung zwischen den Probenbehältnissen 6, 16 in das Probenbehältnis 16 eingeführt. Der weitere Lichtstrahl L3 wird dabei durch das weitere Probenbehältnis 16 und diese zu messende Probe geführt. Die dem Probenbehältnis 16 nachgeschaltete weitere Detektionsvorrichtung D3 erkennt die Wechselwirkung zwischen der zu messenden Probe und dem weiteren Lichtstrahl L3. Diese Wechselwirkung kann sich insbesondere bei kürzerer Erstreckung des Probenbehältnisses 16 von der vorhergehenden Wechselwirkung, also der Wechselwirkung im Probenbehältnis 6, unterscheiden, sodass sich das Spektrum der zu messenden Probe und/oder das Signal der Detektionsvorrichtung D3 ebenfalls unterscheidet. Eine mit der weiteren Detektionsvorrichtung D3 verbundene Recheneinheit kann daraufhin das Spektrum der zu messenden Probe abbilden. Die beiden, durch die Detektionsvorrichtungen D1, D3 erfassten Messungen werden daraufhin zusammengeführt, um die zu messende Probe quantitativ und/oder qualitativ zu bestimmen. Die Messungen können dabei bspw. auf der Recheneinheit zusammengeführt werden.

Die Erfindung ist dabei nicht auf das dargestellte Ausführungsbeispiel beschränkt.

Alle vorstehend beschriebenen Merkmale oder in den Figuren gezeigten Merkmale sind im Rahmen der Ansprüche miteinander kombinierbar. Die vorliegende Erfindung schlägt somit ein Spektrometer vor, welches mit einer einzigen Lampe 3 quantitative und/oder qualitative Eigenschaften der zu messenden Probe einfach, platzsparend und gleichzeitig mit einer hohen Güte bestimmen bzw. ermitteln kann.

## Patentansprüche

1. Spektrometer (1) aufweisend:
- eine sich im Wesentlichen rohrförmig erstreckende Lampe (2) zur Bildung einer sich in Richtung der rohrförmigen Erstreckung und zwischen zwei Punkten erstreckenden Lichtemissionszone (3) zur Abgabe eines ersten Lichtstrahls (L1) und eines zweiten Lichtstrahls (L2) mit einem gleichen Ursprung auf der Lichtemissionszone (3),
- ein im Strahlengang des ersten Lichtstrahls (L1) angeordnetes Probenbehältnis (6) zur Aufnahme einer zu messenden Probe,
- eine in Richtung des ersten Lichtstrahls (L1) angeordnete erste Detektionsvorrichtung (D1) zur quantitativen und/oder qualitativen Bestimmung der in dem Probenbehältnis (6) zu messenden Probe auf Basis einer Wechselwirkung zwischen der zu messenden Probe und dem ersten Lichtstrahl (L1),
- eine in Richtung des zweiten Lichtstrahls (L2) angeordnete zweite Detektionsvorrichtung (D2) zur Referenzierung der quantitativen und/oder qualitativen Bestimmung der zu messenden Probe auf Basis des zweiten Lichtstrahls (L2), und
- ein die Lampe (2) umgebendes Lampengehäuse (5) zur Abgabe der Lichtstrahlen (L1, L2),
- wobei ein Verbindungsmittel (7) zur Verbindung des Probenbehältnisses (6) mit der Lampe (2) vorgesehen ist, **dadurch gekennzeichnet, dass** das Verbindungsmittel (7) eine dem Lampengehäuse (5) und dem Probenbehältnis (6) korrespondierende Form aufweist, derart, dass auf einem Außendurchmesser des Verbindungsmittels (7) das Lampengehäuse (5) aufgenommen ist und in einem Innendurchmesser des Verbindungsmittels (7) das Probenbehältnis (6) aufgenommen ist.

2. Spektrometer (1') nach Anspruch 1, wobei die Lichtemissionszone (3) zur Abgabe wenigstens eines weiteren Lichtstrahls (L3) vorgesehen ist, wobei der erste Lichtstrahl (L1) und der weitere Lichtstrahl (L3) jeweils einen Ursprung auf der Lichtemissionszone (3) haben, wobei das Spektrometer ferner aufweist:
- ein im Strahlengang des weiteren Lichtstrahls (L3) angeordnetes weiteres Probenbehältnis (16) zur Aufnahme einer zu messenden Probe, und
- eine in Richtung des weiteren Lichtstrahls (L3) angeordnete weitere Detektionsvorrichtung (D3) zur quantitativen und/oder qualitativen Bestimmung der in dem weiteren Probenbehältnis (16) zu messenden Probe auf Basis einer Wechselwirkung zwischen der zu messenden Probe und dem weiteren Lichtstrahl (L3).

3. Spektrometer (1') aufweisend:
- eine sich im Wesentlichen rohrförmig erstreckende Lampe (2) zur Bildung einer sich in Richtung der rohrförmigen Erstreckung und zwischen zwei Punkten erstreckenden Lichtemissionszone (3) zur Abgabe eines ersten Lichtstrahls (L1) und eines wenigstens eines weiteren Lichtstrahls (L3) mit jeweils einem Ursprung auf der Lichtemissionszone (3),
- ein im Strahlengang des ersten Lichtstrahls (L1) angeordnetes Probenbehältnis (6) zur Aufnahme einer zu messenden Probe,
- ein im Strahlengang des weiteren Lichtstrahls (L3) angeordnetes weiteres Probenbehältnis (16) zur Aufnahme einer zu messenden Probe,
- eine in Richtung des ersten Lichtstrahls (L1) angeordnete erste Detektionsvorrichtung (D1) zur quantitativen und/oder qualitativen Bestimmung der in dem Probenbehältnis (6) zu messenden Probe auf Basis einer Wechselwirkung zwischen der zu messenden Probe und dem ersten Lichtstrahl (L1),
- eine in Richtung des weiteren Lichtstrahls (L3) angeordnete weitere Detektionsvorrichtung (D3) zur quantitativen und/oder qualitativen Bestimmung der in dem weiteren Probenbehältnis (16) zu messenden Probe auf Basis einer Wechselwirkung zwischen der zu messenden Probe und dem weiteren Lichtstrahl (L3), und
- ein die Lampe (2) umgebendes Lampengehäuse (5) zur Abgabe der Lichtstrahlen (L1, L3),
- wobei ein Verbindungsmittel (7) zur Verbindung des Probenbehältnisses (6) mit der Lampe (2) vorgesehen ist, **dadurch gekennzeichnet, dass** das Verbindungsmittel (7) eine dem Lampengehäuse (5) und dem Probenbehältnis (6) korrespondierende Form aufweist, derart, dass auf einem Außendurchmesser des Verbindungsmittels (7) das Lampengehäuse (5) aufgenommen ist und in einem Innendurchmesser des Verbindungsmittels (7) das Probenbehältnis (6) aufgenommen ist, und
- dass entweder das Verbindungsmittel (7) ferner auch das weitere Probenbehältnis (16) mit der Lampe (2) verbindet, oder ein weiteres Verbindungsmittel vorgesehen ist, welches entsprechend dem Verbindungsmittel (7) ausgestaltet ist, welches das weitere Probenbehältnis (16) mit der Lampe (2) verbindet.

4. Spektrometer (1') nach Anspruch 2 oder 3, wobei die Probenbehältnisse (6, 16) fluidtechnisch miteinander verbunden sind, vorzugsweise in Reihe geschaltet sind, wobei vorzugsweise eines der Probenbehältnisse (6) eine Öffnung (61) zur Zuführung der zu messenden Probe von außen aufweist und ein anderes Probenbehältnis (16) eine Öffnung (162) zur Entnahme der zu messenden Probe von außen aufweist, so dass die zu messende Probe zur quantitativen und/oder qualitativen Bestimmung durch die fluidtechnisch verbundenen Probenbehältnisse (6, 16) geleitet werden kann.

5. Spektrometer (1') nach einem der Ansprüche 2 bis 4, wobei der erste Lichtstrahl (L1) und der weitere Lichtstrahl (L3) einen bezüglich der Erstreckung der Lichtemissionszone (3) gleichen oder anderen Ursprung haben.

6. Spektrometer (1') nach einem der Ansprüche 2 bis 5, wobei die Probenbehältnisse (6, 16) sich in ihrer jeweiligen Erstreckung in Richtung entlang des jeweiligen Lichtstrahls (L1, L3) unterscheiden, vorzugsweise derart, dass die Erstreckung des weiteren Probenbehältnisses (16) in Richtung des weiteren Lichtstrahls (L3) kürzer ist als die Erstreckung des Probenbehältnisses (6) in Richtung des ersten Lichtstrahls (L1).

7. Spektrometer (1') nach einem der Ansprüche 2 und 4 bis 6, wobei die
Lichtemissionszone (3) zur Abgabe wenigstens eines zusätzlichen Lichtstrahls vorgesehen ist, wobei der weitere Lichtstrahl (L3) und der zusätzliche Lichtstrahl den gleichen Ursprung auf der Lichtemissionszone (3) haben, und wobei das Spektrometer wenigstens für eine, mehrere oder alle weiteren Detektionsvorrichtungen ferner aufweist:
- eine in Richtung des zusätzlichen Lichtstrahls angeordnete zusätzliche Detektionsvorrichtung zur Referenzierung der quantitativen und/oder qualitativen Bestimmung der zu messenden Probe auf Basis des zusätzlichen Lichtstrahls.

8. Spektrometer (1, 1') nach einem der vorhergehenden Ansprüche, wobei das Probenbehältnis (6) zwischen der ersten Detektionsvorrichtung (D1) und der Lampe (2) angeordnet ist, und wobei vorzugsweise die Probenbehältnisse (6, 16) jeweils zwischen der jeweiligen Detektionsvorrichtung (D1; D3) und der Lampe (2) angeordnet sind.

9. Spektrometer (1, 1') nach einem der vorhergehenden Ansprüche , wobei zwischen der zweiten Detektionsvorrichtung (D2) und der Lampe (2) ein Referenzbehältnis mit einer Referenzflüssigkeit vorgesehen ist, und wobei die Referenzierung der quantitativen und/oder qualitativen Bestimmung der zu messenden Probe auf Basis einer Wechselwirkung zwischen der Referenzflüssigkeit und dem zweiten Lichtstrahl (L2) erfolgt, und/oder wobei zwischen der zusätzlichen Detektionsvorrichtung und der Lampe (2) ein zusätzliches Referenzbehältnis mit einer Referenzflüssigkeit vorgesehen ist, und wobei die Referenzierung der quantitativen und/oder qualitativen Bestimmung der zu messenden Probe auf Basis einer Wechselwirkung zwischen der Referenzflüssigkeit und dem zusätzlichen Lichtstrahl erfolgt.

10. Spektrometer (1, 1') nach einem der vorhergehenden Ansprüche, wobei der gleiche Ursprung auf der Lichtemissionszone (3) mit einem definierten Abstand zu einem der zwei Punkte vorgesehen ist, wobei der definierte Abstand vorzugsweise zumindest 1mm, besonders bevorzugt zumindest 2mm, ganz besonders bevorzugt zumindest 5mm beträgt.

11. Spektrometer (1, 1') nach einem der vorhergehenden Ansprüche, wobei der erste und der zweite Lichtstrahl (L1, L2) sowie bevorzugt ferner der weitere und der zusätzliche Lichtstrahl (L3) jeweils einen Winkel von 0° bis 90°, bevorzugt einen Winkel von 90°, mit der Lichtemissionszone (3) einschließen, und/oder
wobei der erste und der zweite Lichtstrahl (L1, L2) sowie bevorzugt ferner der weitere und der zusätzliche Lichtstrahl (L3) in einer gemeinsamen Ebene vorgesehen sind, und wobei sich die gemeinsame Ebene vorzugsweise senkrecht zur Erstreckung der Lichtemissionszone (3) erstreckt, und/oder
wobei der erste und der zweite Lichtstrahl (L1, L2) und bevorzugt ferner der weitere und der zusätzliche Lichtstrahl (L3) jeweils einen Winkel einschließen, wobei der Winkel 180° beträgt.

12. Spektrometer (1, 1') nach einem der vorhergehenden Ansprüche, wobei die Detektionsvorrichtungen (D1, D2, D3) jeweils einen Detektor (DE1, DE2, DE3), vorzugsweise ein Detektorchip, und einen Monochromator (M1, M2, M3) zur spektralen Isolierung einer bestimmten Wellenlänge aus den Lichtstrahlen (L1, L2, L3) aufweisen, wobei jeweils der Monochromator (M1, M2, M3) auf dem Detektor oder zwischen Detektor (DE1, DE2, DE3) und Lampe (2) angeordnet ist, wobei bevorzugt die Monochromatoren (M1, M2, M3) jeweils eine rohrförmige Blende (B1, B2, B3) aufweisen, wobei jeweils die Blende (B1, B2, B3) den Monochromator (M1, M2, M3) derart durchläuft, dass die Blende (B1, B2, B3) mit einer ersten Blendenöffnung der Lampe (2) gegenüberliegt und mit einer zweiten Blendenöffnung dem Detektor (DE1, DE2, DE3) gegenüberliegt und vorzugsweise diesen zumindest teilweise umgreift, und wobei ferner vorzugsweise die Blende (B1, B2, B3) zumindest teilweise den gleichen Innendurchmesser hat wie das jeweilige Probenbehältnis (6).

13. Spektrometer (1, 1') nach einem der vorhergehenden Ansprüche, wobei die Lampe (2) einen die röhrenformige Form bildenden lichtdurchlässigen Kolben (4) aufweist, welcher die Lichtemissionszone (3) umgibt, wobei der Kolben (4) bevorzugt ein die Lichtemissionszone (3) erzeugendes Füllgas beinhaltet.

14. Spektrometer (1, 1') nach einem der vorhergehenden Ansprüche, wobei das Lampengehäuse (5) eine erste Öffnung (51) zur Abgabe des ersten Lichtstrahls (L1), eine zweite Öffnung (52) zur Abgabe des zweiten Lichtstrahls (L2) und/oder eine weitere Öffnung (53) zur Abgabe des weiteren Lichtstrahls (L3) und/oder eine zusätzliche Öffnung zur Abgabe des zusätzlichen Lichtstrahls aufweist, wobei die erste und die zweite Öffnung (51, 52) ferner bevorzugt derart vorgesehen sind, dass eine erste Gerade, welche durch die erste Öffnung (51) und die erste Detektionsvorrichtung (D1) führt, und eine zweite Gerade, welche durch die zweite Öffnung (52) und die zweite Detektionsvorrichtung (D2) führt, sich in der Lampe (2) und im gleichen Ursprung schneiden, und wobei die weitere und die zusätzliche Öffnung weiter bevorzugt derart vorgesehen sind, dass eine weitere Gerade, welche durch die weitere Öffnung und die weitere Detektionsvorrichtung (D3) führt, und eine zusätzliche Gerade, welche durch die zusätzliche Öffnung und die zusätzliche Detektionsvorrichtung führt, sich in der Lampe (2) und im gleichen Ursprung schneiden, und/oder
wobei das Lampengehäuse (5) rund oder mehreckig, ferner vorzugsweise rechteckig, ausgebildet ist.

15. Spektrometer (1, 1') nach einem der vorhergehenden Ansprüche, ferner aufweisend einen das jeweilige Probenbehältnis (6, 16) umgebenden Mantel (8), und/oder
wobei das Probenbehältnis (6, 16) Öffnungen (61, 62; 161, 162) zur Zuführung und/oder Entnahme der zu messenden Probe von außen aufweist, wobei vorzugsweise die Öffnung (62) zur Entnahme der Probe des Probenbehältnisses (6) mit der Öffnung (161) zur Zuführung der Probe des weiteren Probenbehältnisses (16) fluidtechnisch miteinander verbunden ist, um die zu messende Probe zur quantitativen und/oder qualitativen Bestimmung durch die fluidtechnisch verbundenen Probenbehältnisse (6, 16) zu leiten.

16. Spektrometer (1, 1') nach einem der vorhergehenden Ansprüche, wobei die Lampe (2) eine Plasmalampe, vorzugsweise eine Niederdruckplasmalampe oder Hochdruckplasmalampe, ist, und/oder
wobei die Lichtemissionszone (3) an den zwei Punkten jeweils eine Elektrode, vorzugsweise eine Topfelektrode, zur Bildung eines Lichtplasmas als Lichtemissionszone (3) zwischen den Elektroden aufweist.

17. Spektrometer (1, 1') nach einem der vorhergehenden Ansprüche, wobei die Lichtemissionszone (3) zur Abgabe von wenigstens zwei weiteren Lichtstrahlen mit jeweils einem Ursprung auf der Lichtemissionszone (3) vorgesehen ist, wobei jedem weiteren Lichtstrahl ein weiteres Probenbehältnis und eine weitere Detektionsvorrichtung zugeordnet ist.

## Claims

1. Spectrometer (1) comprising:
- a substantially tubular lamp (2) for forming a light emission zone (3) extending in the direction of the tubular extension and between two points for emitting a first light beam (L1) and a second light beam (L2) having a same origin on the light emission zone (3),
- a sample container (6) arranged in the beam path of the first light beam (L1) for receiving a sample to be measured,
- a first detection device (D1), arranged in the direction of the first light beam (L1) for quantitative and/or qualitative determination of the sample to be measured in the sample container (6) on the basis of an interaction between the sample to be measured and the first light beam (L1)
- a second detection device (D2) arranged in the direction of the second light beam (L2) for referencing the quantitative and/or qualitative determination of the sample to be measured on the basis of the second light beam (L2) and
- a lamp housing (5) surrounding the lamp (2) for emitting the light beams (L1, L2),
- wherein a connection means (7) is provided for connecting the sample container (6) to the lamp (2), **characterized in that** the connection means (7) has a form corresponding to the lamp housing (5) and the sample container (6) in such a manner that the lamp housing (5) is received on an outside diameter of the connection means (7) and the sample container (6) is received in an inside diameter of the connection means (7).

2. Spectrometer (1') according to Claim 1, wherein the light emission zone (3) is provided for emitting at least one further light beam (L3), wherein the first light beam (L1) and the further light beam (L3) each have an origin on the light emission zone (3), wherein the spectrometer further comprises:
- a further sample container (16) arranged in the beam path of the further light beam (L3) for receiving a sample to be measured, and
- a further detection device (D3) arranged in the beam path of the further light beam (L3) for quantitative and/or qualitative determination of the sample to be measured in the further sample container (16) on the basis of an interaction between the sample to be measured and the further light beam (L3).

3. Spectrometer (1') comprising:
- a lamp (2) extending substantially in the form of a tube for forming a light emission zone (3) extending in the direction of the tubular extension and between two points for emitting a first light beam (L1) and at least one further light beam (L3), each with an origin on the light emission zone (3),
- a sample container (6) arranged in the beam path of the first light beam (L1) for receiving a sample to be measured,
- a further sample container (16) arranged in the beam path of the further light beam (L3) for receiving a sample to be measured,
- a first detection device (D1), arranged in the direction of the first light beam (L1) for quantitative and/or qualitative determination of the sample to be measured in the sample container (6) on the basis of an interaction between the sample to be measured and the first light beam (L1)
- a further detection device (D3) arranged in the direction of the further light beam (L3) for quantitative and/or qualitative determination of the sample to be measured in the further sample container (16) on the basis of an interaction between the sample to be measured and the further light beam (L3) and
- a lamp housing (5) surrounding the lamp (2) for emitting the light beams (L1, L3),
- wherein a connection means (7) is provided for connecting the sample container (6) to the lamp (2), **characterized in that** the connection means (7) has a form corresponding to the lamp housing (5) and the sample container (6) in such a manner that the lamp housing (5) is received on an outside diameter of the connection means (7) and the sample container (6) is received in an inside diameter of the connection means (7) and
- that either the connection means (7) further connects the further sample container (16) to the lamp (2) or a further connection means is provided which is configured according to the connection means (7) which connects the further sample container (16) to the lamp (2).

4. Spectrometer (1') according to Claim 2 or 3, wherein the sample containers (6, 16) are fluidically connected to one another, preferably are connected in series, wherein preferably one of the sample containers (6) has an opening (61) for feeding the sample to be measured from the outside and another sample container (16) has an opening (162) for removing the sample to be measured from the outside, so that the sample to be measured can be guided through the fluidically connected sample containers (6, 16) for the quantitative and/or qualitative determination.

5. Spectrometer (1') according to one of Claims 2 to 4, wherein the first light beam (L1) and the further light beam (L3) have the same or different origin with respect to the extension of the light emission zone (3).

6. Spectrometer (1') according to one of Claims 2 to 5, wherein the sample containers (6, 16) differ in their respective extension in the direction along the respective light beam (L1, L3), preferably in such a manner that the extension of the further sample container (16) in the direction of the further light beam (L3) is shorter than the extension of the sample container (6) in the direction of the first light beam (L1).

7. Spectrometer (1') according to one of Claims 2 and 4 to 6, wherein the light emission zone (3) is provided for emitting at least one additional light beam, wherein the further light beam (L3) and the additional light beam have the same origin on the light emission zone (3) and wherein the spectrometer further comprises at least for one, several or all the further detection devices:
- an additional detection device arranged in the direction of the additional light beam for referencing the quantitative and/or qualitative determination of the sample to be measured on the basis of the additional light beam.

8. Spectrometer (1, 1') according to one of the preceding claims, wherein the sample container (6) is arranged between the first detection device (D1) and the lamp (2) and wherein preferably the sample containers (6, 16) are each arranged between the respective detection device (D1; D3) and the lamp (2).

9. Spectrometer (1, 1') according to one of the preceding claims, wherein a reference container containing a reference liquid is provided between the second detection device (D2) and the lamp (2), and wherein the referencing of the quantitative and/or qualitative determination of the sample to be measured takes place on the basis of an interaction between the reference liquid and the second light beam (L2), and/or wherein an additional reference container containing a reference liquid is provided between the additional detection device and the lamp (2) and wherein the referencing of the quantitative and/or qualitative determination of the sample to be measured is based on an interaction between the reference liquid and the sample.

10. Spectrometer (1, 1') according to one of the preceding claims, wherein the same origin is provided on the light emission zone (3) at a defined distance from one of the two points, wherein the defined distance is preferably at least 1 mm, particularly preferably at least 2 mm, quite particularly preferably at least 5 mm.

11. Spectrometer (1, 1') according to one of the preceding claims, wherein the first and the second light beam (L1, L2) and preferably furthermore the further and the additional light beam (L3) each enclose an angle of 0° to 90°, preferably an angle of 90°, with the light emission zone (3) and/or
wherein the first and the second light beam (L1, L2) and preferably furthermore the further and the additional light beam (L3) are provided in a common plane, and wherein the common plane preferably extends perpendicular to the extension of the light emission zone (3) and/or
wherein the first and the second light beam (L1, L2) and preferably furthermore the further and the additional light beam (L3) each enclose an angle, wherein the angle is 180°.

12. Spectrometer (1, 1') according to one of the preceding claims, wherein the detection devices (D1, D2, D3) each comprise a detector (DE1, DE2, DE3), preferably a detector chip, and a monochromator (M1, M2, M3) for spectrally isolating a specific wavelength from the light beams (L1, L2, L3), wherein the monochromator (M1, M2, M3) is arranged on the detector or between detector (DE1, DE2, DE3) and lamp (2), wherein preferably the monochromators (M1, M2, M3) each have a tubular aperture (B1, B2, B3), wherein the aperture (B1, B2, B3) each pass through the monochromator (M1, M2, M3) such that the aperture (B1, B2, B3) with a first aperture opening lies opposite the lamp (2) and with a second aperture opening lies opposite the detector (DE1, DE2, DE3) and preferably at least partially surrounds the latter, and wherein further preferably the aperture (B1, B2, B3) has at least partially the same inside diameter as the respective sample container (6).

13. Spectrometer (1, 1') according to one of the preceding claims, wherein the lamp (2) has a light transmissive envelope (4) forming the tubular shape, which surrounds the light emission zone (3), wherein the envelope (4) preferably contains a fill gas generating the light emission zone (3).

14. Spectrometer (1, 1') according to one of the preceding claims, wherein the lamp housing (5) has a first opening (51) for emitting the first light beam (L1), a second opening (52) for emitting the second light beam (L2) and/or a further opening (53) for emitting the further light beam (L3) and/or an additional opening for emitting the additional light beam, wherein the first and the second opening (51, 52) are further preferably provided in such a manner that a first straight line which leads through the first opening (51) and the first detection device (D1) and a second straight line which leads through the second opening (52) and the second detection device (D2) intersect in the lamp (2) and at the same origin and wherein the further and the additional opening are provided in such a way that a further straight line which leads through the further opening and the further detection device (D3) and an additional straight line which leads through the additional opening and the additional detection device intersect in the lamp (2) and at the same origin and/or
wherein the lamp housing (5) is configured to be round or polygonal, further preferably rectangular.

15. Spectrometer (1, 1') according to one of the preceding claims, further comprising a jacket (8) surrounding the respective sample container (6, 16) and/or
wherein the sample container (6, 16) has openings (61, 62; 161, 162) for supplying and/or removing the sample to be measured from the outside, wherein preferably the opening (62) for removing the sample from the sample container (6) is fluidically connected with the opening (161) for supplying the sample of the further sample container (16), in order to guide the sample to be measured through the fluidically connected sample containers (6, 16) for the quantitative and/or qualitative determination.

16. Spectrometer (1, 1') according to one of the preceding claims, wherein the lamp (2) is a plasma lamp, preferably a low-pressure plasma lamp or a highpressure plasma lamp and/or
wherein the light emission zone (3) has an electrode, preferably a pot electrode, at each of the two points for forming a light plasma as the light emission zone (3) between the electrodes.

17. Spectrometer (1, 1') according to one of the preceding claims, wherein the light emission zone (3) is provided for emitting at least two further light beams, each having an origin on the light emission zone (3), wherein each further light beam is assigned a further sample container and a further detection device.

## Revendications

1. Spectromètre (1), comportant:
- une lampe (2) s'étendant sensiblement en forme tubulaire, pour créer une zone d'émission lumineuse (3) s'étendant dans la direction de l'extension en forme tubulaire, pour émettre un premier faisceau lumineux (L1) et un deuxième faisceau lumineux (L2) d'une même origine sur une zone d'émission lumineuse (3),
- un récipient d'échantillonnage (6), placé dans la trajectoire de faisceau du premier faisceau lumineux (L1), destiné à recevoir un échantillon qui doit être mesuré,
- un premier dispositif de détection (D1), placé dans la direction du premier faisceau lumineux (L1), pour la détermination quantitative et / ou qualitative de l'échantillon qui doit être mesuré dans le récipient d'échantillonnage (6), sur la base d'une interaction entre l'échantillon qui doit être mesuré et le premier faisceau lumineux (L1),
- un deuxième dispositif de détection (D2), placé dans la direction du deuxième faisceau lumineux (L2), pour le référencement de la détermination quantitative et / ou qualitative de l'échantillon qui doit être mesuré, sur la base du deuxième faisceau lumineux (L2) et
- un boîtier de lampe (5) entourant la lampe (2), destiné à émettre les faisceaux lumineux (L1, L2),
- un moyen de liaison (7) étant prévu, pour relier le récipient d'échantillonnage (6) avec la lampe (2), **caractérisé en ce que** le moyen de liaison (7) présente une forme correspondant au boîtier de lampe (5) et au récipient d'échantillonnage (6), de sorte que le boîtier de lampe (5) soit réceptionné sur un diamètre extérieur du moyen de liaison (7) et que le récipient d'échantillonnage (6) soit réceptionné dans un diamètre intérieur du moyen de liaison (7).

2. Spectromètre (1') selon la revendication 1, la zone d'émission lumineuse (3) étant prévue pour émettre au moins un faisceau lumineux (L3) supplémentaire, le premier faisceau lumineux (L1) et le faisceau lumineux (L3) supplémentaire ayant chacun une origine sur la zone d'émission lumineuse (3), le spectromètre comportant par ailleurs :
- un récipient d'échantillonnage (16) supplémentaire, placé dans la trajectoire de faisceau du faisceau lumineux (L3) supplémentaire, destiné à recevoir un échantillon qui doit être mesuré et
- un dispositif de détection (D3) supplémentaire, placé dans la direction du faisceau lumineux (L3) supplémentaire, pour la détermination quantitative et / ou qualitative de l'échantillon qui doit être mesuré dans le récipient d'échantillonnage (16) supplémentaire, sur la base d'une interaction entre l'échantillon qui doit être mesuré et le faisceau lumineux (L3) supplémentaire.

3. Spectromètre (1'), comportant :
- une lampe (2), s'étendant sensiblement de forme tubulaire, pour créer une zone d'émission lumineuse (3) s'étendant dans la direction de l'extension tubulaire et entre deux points, pour émettre un premier faisceau lumineux (L1) et au moins un faisceau lumineux (L3) supplémentaire, avec chacun une origine sur la zone d'émission lumineuse (3),
- un récipient d'échantillonnage (6), placé dans la trajectoire de faisceau du premier faisceau lumineux (L1), destiné à recevoir un échantillon qui doit être mesuré,
- un récipient d'échantillonnage (16) supplémentaire, placé dans la trajectoire de faisceau du faisceau lumineux (L3) supplémentaire, destiné à recevoir un échantillon qui doit être mesuré,
- un premier dispositif de détection (D1), placé dans la direction du premier faisceau lumineux (L1), pour la détermination quantitative et / ou qualitative de l'échantillon qui doit être mesuré dans le récipient d'échantillonnage (6), sur la base d'une interaction entre l'échantillon qui doit être mesuré et le premier faisceau lumineux (L1),
- un dispositif de détection (D3) supplémentaire, placé dans la direction du faisceau lumineux (L3) supplémentaire, pour la détermination quantitative et / ou qualitative de l'échantillon qui doit être mesuré dans le récipient d'échantillonnage (16) supplémentaire, sur la base d'une interaction entre l'échantillon qui doit être mesuré et le faisceau lumineux (L3) supplémentaire et
- un boîtier de lampe (5) entourant la lampe (2), destiné à émettre les faisceaux lumineux (L1, L3),
- un moyen de liaison (7) étant prévu, pour relier le récipient d'échantillonnage (6) avec la lampe (2), **caractérisé en ce que** le moyen de liaison (7) présente une forme correspondant au boîtier de lampe (5) et au récipient d'échantillonnage (6), de sorte que le boîtier de lampe (5) soit réceptionné sur un diamètre extérieur du moyen de liaison (7) et que le récipient d'échantillonnage (6) soit réceptionné dans un diamètre intérieur du moyen de liaison (7) et
- que soit le moyen de liaison (7) relie également par ailleurs le récipient d'échantillonnage (16) supplémentaire avec la lampe (2) ou qu'il soit prévu un moyen de liaison supplémentaire, lequel est conçu en correspondance avec le moyen de liaison (7), lequel relie le récipient d'échantillonnage (16) supplémentaire avec la lampe (2).

4. Spectromètre (1') selon la revendication 2 ou 3, les récipients d'échantillonnage (6, 16) se trouvant en liaison fluidique les uns avec les autres, étant de préférence montés en série, de préférence l'un des récipients d'échantillonnage (6) comportant un orifice (61), pour amener par l'extérieur l'échantillon qui doit être mesuré et un autre récipient d'échantillonnage (16) comportant un orifice (162), pour prélever par l'extérieur l'échantillon qui doit être mesuré, de sorte que, pour la détermination quantitative et / ou qualitative, l'échantillon qui doit être mesuré puisse être dirigé à travers les récipients d'échantillonnage (6, 16) qui se trouvent en liaison fluidique,.

5. Spectromètre (1') selon l'une quelconque des revendications 2 à 4, le premier faisceau lumineux (L1) et le faisceau lumineux (L3) supplémentaire ayant une même ou une autre origine en ce qui concerne l'extension de la zone d'émission lumineuse (3).

6. Spectromètre (1') selon l'une quelconque des revendications 2 à 5, les récipients d'échantillonnage (6, 16) se différenciant dans leur extension respective dans la direction le long du faisceau lumineux (L1, L3) respectif, de préférence de sorte que l'extension du récipient d'échantillonnage (16) supplémentaire dans la direction du faisceau lumineux (L3) supplémentaire soit plus courte que l'extension du récipient d'échantillonnage (6) dans la direction du premier faisceau lumineux (L1).

7. Spectromètre (1') selon l'une quelconque des revendications 2 et 4 à 6, la zone d'émission lumineuse (3) étant prévue pour émettre au moins un faisceau lumineux additionnel, le faisceau lumineux (L3) supplémentaire et le faisceau lumineux additionnel ayant la même origine sur la zone d'émission lumineuse (3) et le spectromètre comportant par ailleurs, au moins pour un, pour plusieurs ou pour tous les dispositifs de détection supplémentaires :
- un dispositif de détection additionnel, placé dans la direction du faisceau lumineux additionnel, pour le référencement de la détection quantitative et / ou qualitative de l'échantillon qui doit être mesuré, sur la base du faisceau lumineux additionnel.

8. Spectromètre (1, 1') selon l'une quelconque des revendications précédentes, le récipient d'échantillonnage (6) étant placé entre le premier dispositif de détection (D1) et la lampe (2) et de préférence les récipients d'échantillonnage (6, 16) étant placés chacun entre le dispositif de détection (D1 ; D3) respectif et la lampe (2).

9. Spectromètre (1, 1') selon l'une quelconque des revendications précédentes, entre le deuxième dispositif de détection (D2) et la lampe (2) étant prévu un récipient de référence avec un liquide de référence et le référencement de la détermination quantitative et / ou qualitative de l'échantillon qui doit être mesuré s'effectuant sur la base d'une interaction entre le liquide de référence et le deuxième faisceau lumineux (L2) et / ou entre le dispositif de détection additionnel et la lampe (2) étant prévu un récipient de référence additionnel, avec un liquide de référence et le référencement de la détermination quantitative et / ou qualitative de l'échantillon qui doit être mesuré s'effectuant sur la base d'une interaction entre le liquide de référence et le faisceau lumineux additionnel.

10. Spectromètre (1, 1') selon l'une quelconque des revendications précédentes, la même origine étant prévue sur la zone d'émission lumineuse (3) avec un écart défini par rapport à l'un des deux points, l'écart défini s'élevant de préférence à au moins 1 mm, de manière particulièrement préférentielle, à au moins 2 mm, de manière tout particulièrement préférentielle, à au moins 5 mm.

11. Spectromètre (1, 1') selon l'une quelconque des revendications précédentes, le premier et le deuxième faisceaux lumineux (L1, L2), ainsi que de manière préférentielle, par ailleurs le faisceau lumineux (L3) supplémentaire et additionnel incluant chacun un angle de 0 ° à 90 °, de manière préférentielle, un angle de 90 ° avec la zone d'émission lumineuse (3) et / ou
le premier et le deuxième faisceaux lumineux (L1, L2), ainsi que de manière préférentielle, par ailleurs le faisceau lumineux (L3) supplémentaire et additionnel étant prévus dans un plan commun et le plan commun s'étendant de préférence à la perpendiculaire de l'extension de la zone d'émission lumineuse (3) et / ou
le premier et le deuxième faisceaux lumineux (L1, L2) et de manière préférentielle, par ailleurs le faisceau lumineux (L3) supplémentaire et additionnel incluant chacun un angle, l'angle s'élevant à 180 °.

12. Spectromètre (1, 1') selon l'une quelconque des revendications précédentes, les dispositifs de détection (D1, D2, D3) comportant chacun un détecteur (DE1, DE2, DE3), de préférence une puce détectrice et un monochromateur (M1, M2, M3) pour l'isolation spectrale d'une certaine longueur d'onde à partir des faisceaux lumineux (L1, L2, L3), chaque fois le monochromateur (M1, M2, M3) étant placé sur le détecteur ou entre le détecteur (DE1, DE2, DE3) et la lampe (2),
de manière préférentielle, les monochromateurs (M1, M2, M3) comportant chacun un diaphragme (B1, B2, B3) de forme tubulaire, chaque fois le diaphragme (B1, B2, B3) traversant le monochromateur (M1, M2, M3) de sorte que par un premier orifice de diaphragme, le diaphragme (B1, B2, B3) se situe au vis-à-vis de la lampe (2) et par un deuxième orifice de diaphragme, se situe au vis-à-vis du détecteur (DE1, DE2, DE3) et entoure de préférence celui-ci au moins partiellement et par ailleurs de préférence, le diaphragme (B1, B2, B3) ayant au moins partiellement le même diamètre intérieur que le récipient d'échantillonnage (6) respectif.

13. Spectromètre (1, 1') selon l'une quelconque des revendications précédentes, la lampe (2) comportant un piston (4) transparent, créant la forme tubulaire, lequel entoure la zone d'émission lumineuse (3), le piston (4) contenant de manière préférentielle un gaz de remplissage générant la zone d'émission lumineuse (3).

14. Spectromètre (1, 1') selon l'une quelconque des revendications précédentes, le boîtier de lampe (5) comportant un premier orifice (51) pour émettre le premier faisceau lumineux (L1), un deuxième orifice (52) pour émettre le deuxième faisceau lumineux (L2) et / ou un orifice (53) supplémentaire pour émettre le faisceau lumineux (L3) supplémentaire et / ou un orifice additionnel, pour émettre le faisceau lumineux additionnel, de manière préférentielle, le premier et le deuxième orifices (51, 52) étant prévus par ailleurs de sorte qu'une première droite, laquelle conduit à travers le premier orifice (51) et le premier dispositif de détection (D1) et une deuxième droite, laquelle conduit à travers le deuxième orifice (52) et le deuxième dispositif de détection (D2) se recoupent dans la lampe (2) et dans la même origine et l'orifice supplémentaire et l'orifice additionnel étant prévus de manière préférentielle de sorte qu'une droite supplémentaire, laquelle conduit à travers l'orifice supplémentaire et le dispositif de détection (D3) supplémentaire et une droite additionnelle, laquelle conduit à travers l'orifice additionnel et le dispositif de détection additionnel se recoupent dans la lampe (2) et dans la même origine et / ou
le boîtier de lampe (5) étant conçu de forme ronde ou polygonale, de préférence par ailleurs de forme rectangulaire.

15. Spectromètre (1, 1') selon l'une quelconque des revendications précédentes, comportant par ailleurs une enveloppe (8), entourant le récipient d'échantillonnage (6, 16) respectif et / ou
le récipient d'échantillonnage (6, 16) comportant des orifices (61, 62 ; 161, 162) pour amener et / ou pour prélever par l'extérieur l'échantillon qui doit être mesuré, de préférence l'orifice (62) destiné à prélever l'échantillon du récipient d'échantillonnage (6) étant fluidiquement relié mutuellement avec l'orifice (161) destiné à amener l'échantillon du récipient d'échantillonnage (16) supplémentaire, pour guider l'échantillon à travers les récipients d'échantillonnage (6, 16) se trouvant en liaison fluidique, pour la détermination quantitative et / ou qualitative.

16. Spectromètre (1, 1') selon l'une quelconque des revendications précédentes, la lampe (2) étant une lampe plasma, de préférence une lampe plasma basse pression ou une lampe plasma haute pression et / ou
la zone d'émission lumineuse (3) comportant sur les deux points chaque fois une électrode, de préférence une électrode en boisseau, pour créer un plasma lumineux en tant que zone d'émission lumineuse (3) entre les électrodes.

17. Spectromètre (1, 1') selon l'une quelconque des revendications précédentes, la zone d'émission lumineuse (3) étant prévue pour émettre sur la zone d'émission lumineuse (3) au moins deux faisceaux lumineux supplémentaires avec chacun une origine, à chaque faisceau lumineux supplémentaire étant affecté un récipient d'échantillonnage supplémentaire et un dispositif de détection supplémentaire.
